# EUROPEAN PATENT APPLICATION

(11) **EP 4 534 975 A1**
(43) Date of publication of application: **09.04.2025**
(21) Application number: 23834549.0
(22) Date of filing: 31.05.2023
(51) Int. Cl.: G01N 15/14

(54) **PARTICLE DETECTION DEVICE AND SAMPLE ANALYZER**

(30) Priority: 06.07.2022 CN 202221733952 U
(71) Applicant: Shenzhen Mindray Bio-Medical Electronics Co., Ltd., Shenzhen, Guangdong 518057 (CN)
(72) Inventor: WANG, Dongsheng, Shenzhen, Guangdong 518057 (CN); LIU, Yangzan, Shenzhen, Guangdong 518057 (CN); HE, Wei, Shenzhen, Guangdong 518057 (CN)
(74) Representative: KIPA AB
(86) International application number: PCT/CN2023/097533
(87) International publication number: WO 2024/007775

(57) **Abstract**

A particle detection device (3) and a sample analyzer. The particle detection device (3) comprises a light source (700), a front light assembly (200), a main lens barrel (100), a flow chamber assembly (400), and a rear light assembly (300). The front light assembly (200) comprises a single front light lens barrel (210), the single front light lens barrel (210) comprises a front light channel (211), and the main lens barrel (100) has a main channel (110), wherein the cross section of the main channel (110) is circular, and the single front light lens barrel (210) is at least partially located in the main channel (110) so as to be nested in and connected to the main lens barrel (100); or the cross section of the front light channel (211) is circular, and the main lens barrel (100) is partially located in the front light channel (211) so as to be nested in and connected to the single front light lens barrel (210). The front light lens barrel (210) is nested in and connected to the main lens barrel (100). In this way, the displacement of the front light lens barrel (210) and the main lens barrel (100) in a radial plane is limited by lens barrel walls abutting against each other, and therefore, accurate positioning in the radial direction can be achieved simply by ensuring the precision of the inner and outer circles of the front light lens barrel (210) and the main lens barrel (100).

## Description

### CROSS-REFERENCE TO RELATED APPLICATION

This application is filed based on and claims priority to Chinese patent application No. 202221733952.0 filed on July 6, 2022, the disclosure of which is hereby incorporated by reference in its entirety.

### TECHNICAL FIELD

The invention relates to the field of medical devices, and in particular to a particle detection device and a sample analyzer.

### BACKGROUND

Common particle detection devices (such as cell detection devices) are devices classifying and counting particles based on a Flow CytoMetry (FCM) technology. The basic measurement principle is as follows. Sample particles (such as blood cells) treated with a reagent are wrapped by sheath liquid and pass through a flow chamber one by one under actuation of pressure. A laser emitted by a light emission component illuminates the sample particles in the flow chamber and scatters, and then passes through a light receiving device to form multiple signals, such as a scattered light signal, a fluorescence signal and a light absorption signal. Therefore, different types of particles are classified and counted according to these signals. In order to detect the particles or cells accurately, it is usually necessary to ensure high optical alignment accuracy for a laser excitation module, a flow chamber module and a signal collection module. At present, for most particle detection devices on the market, various modules are connected to a substrate through a sliding mechanism and various modules are required to be adjusted respectively. Therefore, there are many dimensions for alignment, which leads to a high production cost and a low production efficiency.

### SUMMARY

The invention is intended to solve at least one of the technical problems existed in the related art. To this end, the invention proposes a particle detection device which may reduce alignment cost and improve alignment efficiency.

The invention further proposes a sample analyzer to which the above-mentioned particle detection device is applied.

A particle detection device according to a first embodiment of the invention includes a light source, a front optical assembly, a main lens barrel, a flow chamber assembly, a rear optical assembly, and a light receiving assembly.

The light source is configured to provide an illuminating light.

The front optical assembly includes a single front optical lens barrel and a front optical module. The single front optical lens barrel includes a front optical channel in which the front optical module is arranged. The illuminating light passes through the front optical module. The front optical module shapes the illuminating light.

The main lens barrel has a main channel through which the illuminating light shaped by the front optical module passes.

The flow chamber assembly is connected to the main lens barrel, and has a detection component configured for a sample solution to be tested to pass through. The detection component includes an incoming side arranged toward the front optical assembly and an outgoing side arranged opposite to the incoming side. The illuminating light shaped by the front optical module enters the detection component from the incoming side, illuminates the sample solution to be tested and then exits from the outgoing side.

The rear optical assembly includes a rear optical module which shapes the illuminating light exited from the outgoing side of the detection component.

The light receiving assembly is configured to receive the illuminating light shaped by the rear optical assembly.

A cross section of the main channel has a circular shape. The single front optical lens barrel is at least partially located in the main channel, to form a nested connection with the main lens barrel.

Or, a cross section of the front optical channel has a circular shape. The main lens barrel is partially located in the front optical channel, to form a nested connection with the single front optical lens barrel.

A central axis of the front optical channel, a central axis of the main channel and an optical axis of the front optical module are substantially coaxial.

The sample extraction device according to the embodiment of the invention has at least the following beneficial effects.

The front optical lens barrel forms a nested connection with the main lens barrel. In this way, a displacement between the front optical lens barrel and the main lens barrel in a radial plane is limited by lens barrel walls abutted mutually. Therefore, it only needs to ensure accuracy of inner and outer circles of the front optical lens barrel and the main lens barrel, so that accurate positioning in a radial direction may be achieved.

In other embodiments of the invention, the light source may be movable relative to the main lens barrel along an axial direction of the main channel, to adjust a distance between the light source and the flow chamber assembly.

In other embodiments of the invention, the light source may be connected to the single front optical lens barrel.

The single front optical lens barrel, the light source and the front optical module are synchronously movable relative to the main lens barrel along the axial direction of the main channel.

Or, the light source is movable relative to the single front optical lens barrel along the axial direction of the main channel.

In other embodiments of the invention, the particle detection device may further include a limiter. The limiter is connected to one of the single front optical lens barrel and the main lens barrel, and is capable of acting on the other of the single front optical lens barrel and the main lens barrel, to maintain a relative position between the single front optical lens barrel and the main lens barrel along the axial direction of the main channel, and/or to limit relative rotation between the single front optical lens barrel and the main lens barrel along a circumferential direction of the main channel or a circumferential direction of the front optical channel.

In other embodiments of the invention, the other of the single front optical lens barrel and the main lens barrel may have a limiting groove. A distance between groove walls at two sides of the limiting groove gradually decreases along a radial direction pointing to the central axis of the main channel. The limiter is inserted into the limiting groove and abuts against the groove walls at the two sides of the limiting groove.

In other embodiments of the invention, the rear optical module may include a first light converging lens and a first diaphragm. The light receiving assembly is configured to receive the illuminating light that exits from the outgoing side of the detection component and passes through the first light converging lens and the first diaphragm.

The particle detection device further includes a pressing member connected to the main lens barrel, and the first diaphragm is clamped between the main lens barrel and the pressing member.

In other embodiments of the invention, the first light converging lens may be connected to the main lens barrel, and may be located between the detection component and the first diaphragm.

In other embodiments of the invention, the pressing member may be configured as a rear optical lens barrel. The first light converging lens and the light receiving assembly are both connected to the rear optical lens barrel. The first light converging lens is located between the first diaphragm and the light receiving assembly.

In other embodiments of the invention, the pressing member may be configured as a rear optical lens barrel having at least a first rear optical channel.

In case that a cross section of the main channel has a circular shape, the rear optical lens barrel is at least partially located in the main channel, to form a nested connection with the main lens barrel. Or, in case that a cross section of the first rear optical channel has a circular shape, the main lens barrel is partially located in the first rear optical channel, to form a nested connection with the rear optical lens barrel.

The first rear optical channel is configured for the illuminating light exited from the outgoing side of the detection component to pass through. A central axis of the first rear optical channel, the central axis of the main channel, the central axis of the front optical channel and the optical axis of the front optical module are substantially coaxial.

In other embodiments of the invention, the main channel may include a first channel section and a second channel section sequentially arranged along an axial direction of the main channel. A diameter of the first channel section is less than a diameter of the second channel section, to form an abutting surface at a conjunction of the first channel section and the second channel section. The pressing member is inserted into the second channel section, to press the first diaphragm against the abutting surface.

In other embodiments of the invention, a wall of the second channel section may be provided with a first hole penetrating to an outer surface of the main lens barrel. The first hole is configured for the first diaphragm to move relative to the main lens barrel along a penetration direction of the first hole.

In other embodiments of the invention, the pressing member may be detachably connected to the main lens barrel. The first diaphragm is configured to be movable relative to the main lens barrel along a first direction when the pressing member is in a non-pressing state. The first direction is parallel to a radial direction of the main channel that is perpendicular to a flow direction of the sample solution to be tested.

In other embodiments of the invention, one of the main lens barrel and the first diaphragm may be provided with a first positioning component, the other of the main lens barrel and the first diaphragm is provided with a second positioning component, and the first diaphragm is movable along the first direction through the first positioning component and the second positioning component.

Or, one of the pressing member and the first diaphragm is provided with a first positioning component, the other of the pressing member and the first diaphragm is provided with a second positioning component, and the first diaphragm is movable along the first direction through the first positioning component and the second positioning component.

In other embodiments of the invention, the rear optical assembly may further include a rear optical lens barrel having at least a first rear optical channel. A central axis of the first rear optical channel, the central axis of the main channel, the central axis of the front optical channel and the optical axis of the front optical module are substantially coaxial. The rear optical module includes a first light converging lens and a first diaphragm. The light receiving assembly is configured to receive the illuminating light that exits from the outgoing side of the detection component and passes through the first light converging lens and the first diaphragm. The first light converging lens and the first diaphragm are arranged in the first rear optical channel, and the light receiving assembly is connected to the rear optical lens barrel.

In case that a cross section of the main channel has a circular shape, the rear optical lens barrel is at least partially located in the main channel, to form a nested connection with the main lens barrel. Or, in case that a cross section of the first rear optical channel has a circular shape, the main lens barrel is partially located in the first rear optical channel, to form a nested connection with the rear optical lens barrel.

In other embodiments of the invention, the rear optical module may include a first light converging lens and a first diaphragm, and the light receiving assembly is configured to receive the illuminating light that exits from the outgoing side of the detection component and passes through the first light converging lens and the first diaphragm. The first light converging lens, the first diaphragm and the light receiving assembly are all connected to the main lens barrel.

In other embodiments of the invention, a wall of the main channel may be provided with a first hole penetrating to an outer surface of the main lens barrel, and the first diaphragm is configured to be movable relative to the main lens barrel through the first hole along a penetration direction of the first hole.

In other embodiments of the invention, at least one end of the first diaphragm may be extended out of the first hole, and the particle detection device further includes a fixing member which acts on an extended part of the first diaphragm to fix the first diaphragm to the main lens barrel.

In other embodiments of the invention, the rear optical assembly may further include a rear optical lens barrel having at least a first rear optical channel. The first rear optical channel is configured for the illuminating light exited from the outgoing side of the detection component to pass through. A central axis of the first rear optical channel, the central axis of the main channel, the central axis of the front optical channel and the optical axis of the front optical module are substantially coaxial. The rear optical module is at least partially connected to the rear optical lens barrel.

Or, the rear optical assembly includes a rear optical module, and the rear optical module is entirely connected to the main lens barrel.

In other embodiments of the invention, the flow chamber assembly may further include a solution injection component and a solution discharge component. The solution injection component, the detection component and the solution discharge component are sequentially arranged along a flow direction of the sample solution to be tested. At least the detection component is located in the main channel.

In other embodiments of the invention, the flow chamber assembly may be connected to the main lens barrel and may be configured to be movable relative to the main lens barrel along a first direction. The first direction is parallel to a radial direction of the main channel that is perpendicular to a flow direction of the sample solution to be tested.

In other embodiments of the invention, one of the main lens barrel and the flow chamber assembly may be provided with a third positioning component, and the other of the main lens barrel and the flow chamber assembly is provided with a fourth positioning component. The flow chamber assembly is movable relative to the main lens barrel along the first direction through the third positioning component and the fourth positioning component.

In other embodiments of the invention, the rear optical module may include a first light converging lens and a reflector, and the light receiving assembly includes a first light receiving device and a second light receiving device.

The first light converging lens is configured to converge a first illuminating light exited from the outgoing side of the detection component and within a first angle range, a second illuminating light exited from the outgoing side of the detection component and within a second angle range, and a third illuminating light exited from the outgoing side of the detection component and within a third angle range.

The reflector is configured to reflect a light formed by the second illuminating light after being converged by the first light converging lens.

The first light receiving device is configured to receive a light formed by the first illuminating light after being converged by the first light converging lens and a light formed by the third illuminating light after being converged by the first light converging lens, and the second light receiving device is configured to receive a light formed by the second illuminating light after being converged by the first light converging lens and reflected by the reflector.

In other embodiments of the invention, angles in the second angle range may be less than angles in the first angle range, and angles in the third angle range is greater than angles in the second angle range and less than angles in the first angle range.

In other embodiments of the invention, both the first light receiving device and the second light receiving device may have a light receiving area. The light receiving area of the first light receiving device is oriented in the same direction as the light receiving area of the second light receiving device. Along an axial direction of the main channel, a distance between the light receiving area of the first light receiving device and the first light converging lens is less than a distance between the light receiving area of the second light receiving device and the first light converging lens.

In other embodiments of the invention, the front optical module may include a cylindrical lens and a second light converging lens that are sequentially arranged along an axial direction of the front optical channel and located in the front optical channel.

In other embodiments of the invention, the front optical module may further include a non-spheric lens located in the front optical channel and between the light source and the cylindrical lens.

In other embodiments of the invention, the front optical module may further include an optical isolator located in the front optical channel and between the non-spheric lens and the cylindrical lens.

And/or, the front optical module further includes a second diaphragm located in the front optical channel and between the light source and the non-spheric lens.

In other embodiments of the invention, the front optical channel may include, along an axial direction of the front optical channel, multiple first installation cavities sequentially arranged and extended to a rear end surface of the front optical lens barrel, and inner diameters of the multiple first installation cavities increase sequentially.

In other embodiments of the invention, the front optical channel may further include a second installation cavity extended to a front end surface of the front optical lens barrel, and the light source is at least partially located in the second installation cavity.

A sample analyzer according to a fifth embodiment of the invention includes a sampling device, a sample preparation device, the particle detection device, a liquid supply device, and a controller.

The sampling device is configured to acquire a sample to be tested.

The sample preparation device is configured to receive the sample to be tested acquired by the sampling device, and mix the sample to be tested with a reagent, to prepare a sample solution to be tested.

The liquid supply device is configured to provide a sheath liquid to the flow chamber assembly, so that particles in the sample solution to be tested pass through the detection component in a queue under wrapping of the sheath liquid.

The controller is configured to obtain a measurement result of the sample to be tested according to a feedback signal received by the light receiving assembly.

Additional aspects and advantages of the invention will be partially given in the following descriptions, part of which will be apparent from the following descriptions, or will be known by practice of the invention.

### BRIEF DESCRIPTION OF THE DRAWINGS

The invention will be further described below with reference to the drawings and embodiments. In the drawings:
FIG. 1 is a schematic diagram of a particle detection device in the related art;
FIG. 2 is a schematic stereogram of a particle detection device from one direction in an embodiment of the invention;
FIG. 3 is a schematic stereogram of the particle detection device in FIG. 2 from another direction;
FIG. 4 is a cross-sectional view of the particle detection device in FIG. 2 in a disassembled state, the cross-sectional plane in FIG. 4 is arranged vertically;
FIG. 5 is a cross-sectional view of the particle detection device in FIG. 2 in a assembled state, the cross-sectional plane in FIG. 5 is arranged horizontally;
FIG. 6 is a schematic stereogram in which a main lens barrel is connected with a first diaphragm in FIG. 2;
FIG. 7 is a schematic stereogram of a solution injection component in FIG. 2;
FIG. 8 is a schematic stereogram of the particle detection device in FIG. 2 with a flow chamber assembly hidden;
FIG. 9 is a schematic diagram of an optical path of the particle detection device in FIG. 2;
**[**0074] FIG. 10 is a schematic stereogram of a sample analyzer in an embodiment of the invention.

### List of reference numerals:

sampling device 1, sample preparation device 2, particle detection device 3, display device 4, control device 5, first housing 6, second housing 7;
front optical module 10, flow chamber module 20, signal collection module 30, detector module 40, substrate 50, sliding mechanism 60;
main lens barrel 100, main channel 110, first channel section 111, second channel section 112, abutting surface 113, first hole 120, first positioning component 130, second hole 140, second positioning surface 150, threaded hole 151, fourth positioning surface 160, front optical assembly 200, front optical lens barrel 210, front optical channel 211, limiting groove 212, first installation cavity 213, second installation cavity 214, second diaphragm 220, cylindrical lens 230, second light converging lens 240, non-spheric lens 250, optical isolator 260, rear optical assembly 300, rear optical lens barrel 310, first rear optical channel 311, second rear optical channel 312, first light converging lens 320, first diaphragm 330, second positioning component 331, reflector 340, third diaphragm 350, fourth diaphragm 360, third light converging lens 370, flow chamber assembly 400, solution injection component 410, first positioning surface 411, third positioning surface 412, first installation part 413, second installation part 414, connection hole 415, flange 416, boss 417, detection component 420, solution discharge component 430, limiter 500, support member 600, light source 700, first light receiving device 810, second light receiving device 820, first illuminating light L1, second illuminating light L2, third illuminating light L3.

### DETAILED DESCRIPTION

Embodiments of the invention will be described in detail below, examples of the embodiments are shown in the drawings, and the same or similar reference numerals represent the same or similar elements, or elements with the same or similar functions throughout the drawings. The embodiments described below with reference to the drawings are exemplary, are only intended to explain the invention, and cannot be understood as limitation of the invention.

In descriptions of the invention, it should be appreciated that descriptions related to orientations, such as orientation or position relationships indicated by "up", "down", "front", "rear", "left", "right" or the like are based on orientation or position relationships shown in the drawings, are only intended to facilitate the descriptions of the invention and simplify the descriptions, and are not intended to indicate or imply that the referred device or element must have a specific orientation or must be configured and operate in a specific orientation, and thus cannot be understood as limitation of the invention.

In the descriptions of the invention, "several" means one or more, "multiple" means two or more, "greater than", "less than", "exceed" or the like are understood as excluding the number itself, and "above", "below", "within" or the like are understood as including the number itself. If there is a description related to "first" and "second", they are only for the purpose of distinguishing technical features, and cannot be understood as indicating or implying relative importance, or implicitly indicating a number of indicated technical features, or implicitly indicating a sequential relationship of the indicated technical features.

In the descriptions of the invention, unless otherwise defined explicitly, words such as "arrange", "install", "connect" or the like should be understood in a broad sense. Specific meanings of the above words in the invention may be reasonably determined by those skilled in the art with reference to specific contents of technical solutions.

In the descriptions of the invention, descriptions made by referring to terms "an embodiment", "some embodiments", "exemplary embodiments", "example", "specific example", or "some examples" or the like are intended to indicate that specific features, structures, materials or characteristics described with reference to the embodiment or example are included in at least one embodiment or example of the invention. In the description, schematic expressions of the above terms do not necessarily refer to the same embodiment or example. Furthermore, the described specific features, structures, materials or characteristics may be combined in a suitable manner in any one or more embodiments or examples.

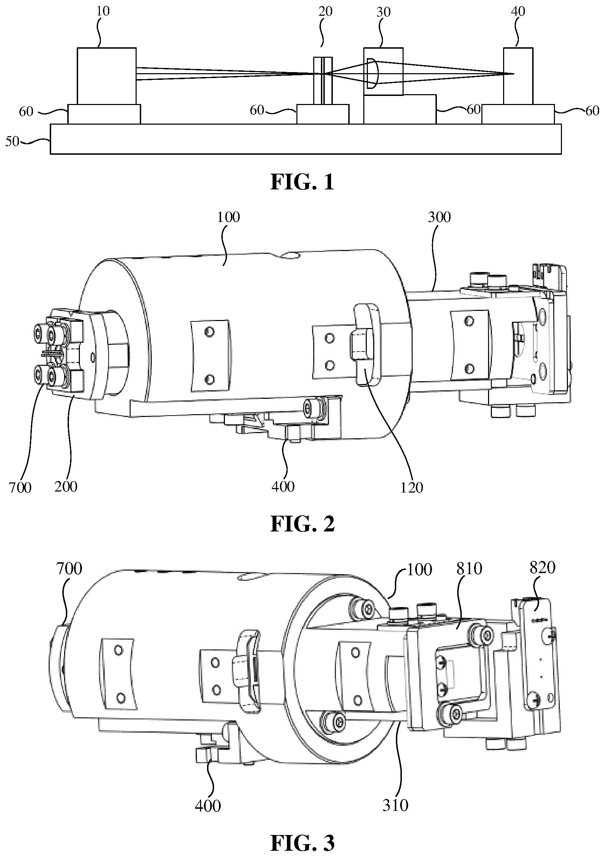

A basic principle of a particle detection device is as follows. A sample solution containing particles to be tested is enveloped by a sheath liquid, so that the particles to be tested are arranged in a single row and sequentially pass through a detection area of a flow chamber. Then by illuminating the particles to be tested flowing through the detection area via a laser and receiving a scattered light and/or fluorescence formed after illumination via a light receiving device, relevant particle parameters may be further obtained based on a scattered light signal and/or a fluorescence signal. With reference to FIG. 1, a current typical particle detection device is shown. The particle detection device includes a front optical module 10, a flow chamber module 20, a signal collection module 30, a detector module 40, a substrate 50, and multiple sliding mechanisms 60. A sample solution to be tested flows through the flow chamber module 20 along a vertical direction. Light emitted by the front optical module 10 illuminates a detection area of the flow chamber module 20, and light exited from the flow chamber module 20 is collected by the signal collection module 30, and then is received by the detector module 40. Since the particles to be tested usually have a very small size, accuracy of the entire optical path is required to be very high. In order to ensure accuracy of the optical path, in the particle detection device in FIG. 1, each of the front optical module 10, the flow chamber module 20, the signal collection module 30 and the detector modules 40 is connected to the substrate 50 through a respective one of the sliding mechanisms 60. During assembly, an operator adjusts and tests positions of the modules relative to each other through the sliding mechanisms 60. Since there is a large number of modules and the modules involve movement in at least two dimensions, alignment operation is very complicated as a whole, which significantly increases production cost.

Based on the above problem, the invention proposes a particle detection device. In the particle detection device, at least two modules are connected by using a main lens barrel 100 as a medium. Accuracy of the optical path is ensured through accuracy of processing the main lens barrel 100 and accuracy of assembling the main lens barrel 100 with other modules, thereby significantly reducing alignment difficulty and reducing cost. Different assembly solutions will be described below with reference to the drawings and different embodiments.

In order to facilitate descriptions, terms appeared in the invention are explained first.

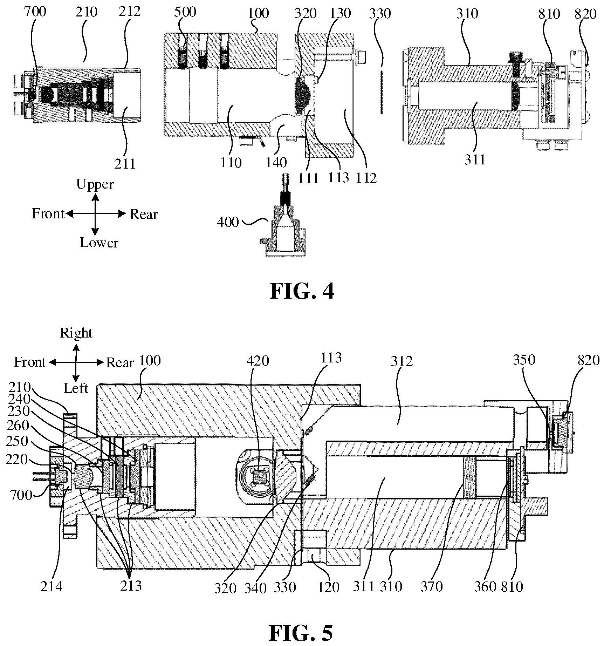

A phrase "flow direction of the sample solution to be tested" refers to a flow direction of the sample solution containing particles to be tested in the flow chamber. When the particle detection device is arranged on a horizontal surface as shown in FIG. 4, "flow direction of the sample solution to be tested" may be understood as a direction from bottom to top in FIG. 4.

A phrase "axial direction of the main channel" refers to an extension direction of a central axis of the main channel. When the particle detection device is arranged on the horizontal surface as shown in FIG. 4, "axial direction of the main channel" may be understood as a direction from front to rear or a direction from rear to front. In some description, "axial direction of the main channel" is simply expressed as "axial direction".

A phrase "radial direction of the main channel that is perpendicular to a flow direction of the sample solution to be tested" refers to a direction of diameter of any cross section of the main channel that is perpendicular to the flow direction of the sample solution to be tested. When the particle detection device is arranged on a horizontal surface as shown in FIG. 5, the "radial direction of the main channel that is perpendicular to a flow direction of the sample solution to be tested" may be understood as a direction passing through the central axis of the main channel and from left to right or from right to left.

A phrase "first direction" refers to a direction parallel to the "radial direction of the main channel that is perpendicular to a flow direction of the sample solution to be tested". In other words, when the first direction is involved, it is not required that the first direction must pass through the central axis of the main channel. When the particle detection device is arranged on the horizontal surface as shown in FIG. 5, "first direction" may be understood as a direction from left to right or from right to left.

A phrase "substantially coaxial" refers to a situation where a central axis and another central axis, the central axis and the optical axis, and the central axis and the optical axis are coaxial exactly or in an allowable error range. Specifically, "substantially coaxial" includes two situations. In one situation, axes are parallel to each other and a distance between the axes is in a preset range. The preset range includes 0. That is, the axes may coincide with each other or deviate from each other by a certain distance. In another situation, the axes intersect with each other and an angle between the axes is in a preset range.

With reference to FIGS. 2 to 5, a schematic stereogram and a cross-sectional view of a particle detection device in an embodiment of the invention are shown respectively. A cross-sectional plane in FIG. 4 is a vertical plane passing through an axis of the main lens barrel 100. Various modules in FIG. 4 are in a disassembled state. A cross-sectional plane in FIG. 5 is a horizontal plane passing through the axis of the main lens barrel 100. The particle detection device is mainly formed by the main lens barrel 100, a front optical assembly 200, a rear optical assembly 300, a flow chamber assembly 400, a light source 700, and a light receiving assembly. The light source 700 is configured to provide an illuminating light. The flow chamber assembly 400 has a flow channel configured for a sample solution to be tested to pass through. The front optical assembly 200 is configured to shape the illuminating light exiting from the light source 700 and incident on the flow chamber assembly 400. The rear optical assembly 300 is configured to shape the illuminating light exited from the flow chamber assembly 400. The light receiving assembly is configured to receive the illuminating light shaped by the rear optical assembly.

The front optical assembly 200 includes a front optical module. The front optical module includes an optical shaping element. The illuminating light from the light source 700 is shaped by the shaping element and then illuminates the flow chamber assembly 400, and forms a spot on a detection component 420 of the flow chamber assembly 400. The rear optical assembly 300 includes a rear optical module. The rear optical module includes a first light converging lens and a first diaphragm component. The illuminating light exited from the flow chamber assembly 400 passes through the first light converging lens and the first diaphragm, and then is received by the light receiving assembly. The light receiving assembly includes a light receiving device configured to receive an optical signal and convert the optical signal into an electrical signal.

The flow chamber assembly 400 includes a detection component 420 configured for the sample solution to be tested to pass through. The detection component 420 is made of a light transmission material such as quartz glass, and interiorly has a flow channel extended along a vertical direction. The sample solution to be tested and a sheath liquid enveloping the sample solution to be tested flow through the flow channel. The detection component 420 has an incoming side (such as a front side) arranged toward the front optical assembly 200 and an outgoing side (such as a rear side) arranged opposite to the incoming side. The illuminating light shaped by the front optical module enters the detection component from the incoming side, and illuminates the sample solution to be tested and then exits from the outgoing side. Generally speaking, the light emitted by the light source 700 is shaped by the front optical module, then is incident on the detection component 420 from the incoming side, illuminates the sample solution to be tested and then exits from the outgoing side, then is shaped by the rear optical assembly 300, and then is received by the light receiving assembly.

The main lens barrel 100 is used as a main installation structure and is configured to install more than two modules. The main lens barrel 100 has a main channel 110 configured for the light exited from the front optical assembly 200 to pass through. The main lens barrel 100 is used as a connection medium to form a nested connection with other structures such as a front optical lens barrel, a rear optical lens barrel or the like, so that centering in the optical path may be ensured by accuracy of alignment between the lens barrels, thereby greatly reducing alignment difficulty and cost. In some embodiments, as shown in FIG. 2 to FIG. 5, the main lens barrel has a cylindrical structure as a whole, thereby facilitating processing and further ensuring processing accuracy.

Based on the above structure, descriptions are made first based on a basic solution where the front optical lens barrel forms a nested connection with the main lens barrel. With reference to FIG. 4 and FIG. 5, the front optical assembly 200 according to a first embodiment of the invention further includes a front optical lens barrel 210. The front optical lens barrel has a front optical channel 211 in which the front optical module is arranged. The illuminating light passes through the front optical module and is shaped by the front optical module. In the embodiment, the light source 700 and the front optical module are both connected to the front optical lens barrel 210. In some other embodiments, the front optical module is connected to the front optical lens barrel 210. The front optical lens barrel 210 forms a nested connection with the main lens barrel 100. After the front optical lens barrel 210 forms a nested connection with the main lens barrel 100, a central axis of the front optical channel 211, a central axis of the main channel 110 and an optical axis of the front optical module are substantially coaxial.

There are two solutions for the nested connection between the front optical lens barrel 210 and the main lens barrel 100.

In one solution, a cross section of the main channel 110 has a circular shape, and the front optical lens barrel 210 is at least partially located in the main channel 110. In other words, the solution is a situation where the front optical lens barrel 210 is inserted into the main lens barrel 100. An example is shown in FIG. 5 where a rear end of the front optical lens barrel 210 is inserted into a front end of the main channel 110. In some other embodiments, the entire front optical lens barrel 210 is inserted into the main lens barrel 100. In order to adapt to insertion-fit, an outer profile of an insertion part of the front optical lens barrel 210 is set to be circular, and matches shape and size of the main channel 110. In the embodiment shown in the figure, the front optical lens barrel 210 is set to have a cylindrical structure as a whole. After the front optical lens barrel 210 is assembled to the main lens barrel 100, a displacement between the front optical lens barrel 210 and the main lens barrel 100 in a radial plane is limited by lens barrel walls abutted mutually. Therefore, ensuring accuracy of an outer circle of the front optical lens barrel 210 and accuracy of an inner circle of the main lens barrel 100 may be sufficient to achieve centering of the lens barrels. Further, in combination with processing accuracy and assembly accuracy, accurate installation between optical components and the lens barrels is ensured and the illuminating light exited after it is shaped by the front optical assembly 200 may accurately illuminate particles passing through the detection component 420. Therefore, structures may be simplified and the number of alignment operations and alignment cost may be significantly reduced. It may be appreciated that in the solution, cross sections of both the main channel 110 and the insertion part of the front optical lens barrel 210 are circular, and compared to other cavities and insertion parts with non-circular cross sections (such as a polygonal cavity including rectangles, or a special-shaped cavity of which an inner wall surface includes flat and arc surfaces), a high processing accuracy may be ensured through a relatively simple process. For example, a circular channel or circular outer profile with a high accuracy may be obtained by rotating a tool relative to a blank to cut the blank.

In another solution, a cross section of the front optical channel 211 has a circular shape, and the main lens barrel 100 is partially located in the front optical channel 211. In other words, the solution is a situation where the main lens barrel 100 is inserted into the front optical lens barrel 210. For example, a front end of the main lens barrel 100 is inserted into a rear end of the front optical channel 211. In order to adapt to insertion-fit, an outer profile of an insertion part of the main lens barrel 100 is set to be circular, and matches shape and size of the front optical channel 211. For example, the main lens barrel 100 is set to have a cylindrical structure as a whole. Similarly, the solution may also achieve a purpose of simplifying structures and reduce the number of alignment operations and alignment cost. It should be noted that shape of the cross section of the main channel 110 is not limited to being circular in the solution.

Furthermore, in the embodiment, the front optical assembly 200 includes a single front optical lens barrel 210, the main lens barrel 100 forms a nested connection with the single front optical lens barrel 210, and at least the front optical module is indirectly connected to the main lens barrel 100 through the front optical lens barrel 210. In other words, a front optical part in the embodiment has one and only one lens barrel directly forming a nested connection with the main lens barrel 100. The lens barrel directly forming a nested connection with the main lens barrel 100 is the front optical lens barrel 210 of the embodiment. The front optical module includes multiple lenses. In some embodiments, multiple lenses are directly connected to the front optical lens barrel 210 and the optical axes of multiple lenses are ensured to be substantially coaxial based on accuracy of processing and assembling the front optical lens barrel 210, thus structures thereof are relatively simplified and the number of members may be reduced. In some other embodiments, the front optical module further includes at least one secondary lens barrel. At least a part of multiple lenses are connected to the secondary lens barrel, and then are connected to the front optical lens barrel 210 through the secondary lens barrel. Alignment among multiple lenses is ensured based on processing and assembly accuracy of the front optical lens barrel 210 and the secondary lens barrel. In such a way, modular assembly of the front optical module may be achieved. It should be noted that even when the secondary lens barrel is present in the front optical module, only the front optical lens barrel 210 forms a nested connection with the main lens barrel 100, and the secondary lens barrel is indirectly connected to the main lens barrel 100 through the front optical lens barrel 210. In this way, the front optical assembly 200 may be separately assembled in advance, and then the front optical lens barrel 210 forms a nested connection with the main lens barrel 100, which facilitates assembly.

Based on the front optical lens barrel 210 forming a nested connection with the main lens barrel 100 as described above, in some embodiments, the light source 700 is movable relative to the main lens barrel 100 along an axial direction of the main channel 110, to adjust a distance between the light source 700 and the flow chamber assembly 400. Specifically, when the light source 700 is connected to the front optical lens barrel 210, the front optical lens barrel 210, the light source 700 and the front optical module are synchronously movable relative to the main lens barrel 100. Alternatively, the front optical lens barrel 210 may remain fixed relative to the main lens barrel 100, and only the light source 700 moves relative to the front optical lens barrel 210 (the main lens barrel 100), for example, the light source 700 is slidably connected to the front optical lens barrel 210 through the secondary lens barrel. When the light source 700 is not directly connected to the front optical lens barrel 210, the front optical lens barrel 210 remains fixed relative to the main lens barrel 100, and only the light source 700 moves relative to the front optical lens barrel 210 (the main lens barrel 100). Taking FIG. 5 as an example, the light source 700 is connected to the front optical lens barrel 210, and a certain external force may be applied to the front optical lens barrel 210 to overcome a friction force between the light source 700 and the front optical lens barrel 210, thereby driving the front optical lens barrel 210 to slide in the main lens barrel 100. In some other embodiments, structures such as axial screws or the like may also be arranged between the front optical lens barrel 210 and the main lens barrel 100, and rotation of the screws may drive relative movement between the two lens barrels.

When the front optical lens barrel 210 is movable relative to the main lens barrel 100, in some embodiments, the particle detection device further includes a limiter 500. The limiter 500 is connected to one of the front optical lens barrel 210 and the main lens barrel 100, and is capable of acting on the other of the front optical lens barrel 210 and the main lens barrel 100, to maintain a relative position between the front optical lens barrel 210 and the main lens barrel 100 along the axial direction after a movement between the two lens barrels occurs, to avoid relative movement between the front optical lens barrel 210 and the main lens barrel 100 from occurring after adjustment. As shown in FIG. 4, the limiter 500 may be an elastic pin. The elastic pin includes a cylindrical main body. An elastic member is arranged in the main body. A roller is arranged at an end of the main body, and the elastic member abuts against a ball. A lens barrel wall of the main lens barrel 100 is provided with a radial installation hole. The limiter 500 is located in the installation hole, and the roller abuts against an outer wall of the front optical lens barrel 210. In this way, people for alignment may move the front optical lens barrel 210 conveniently during alignment, and after movement, the limiter 500 may increase a friction force between the front optical lens barrel 210 and the main lens barrel 100, so that the two lens barrels may not move arbitrarily. In some other embodiments, the limiter 500 may be a magnet and the front optical lens barrel 210 is made of a ferromagnetic material. A relative position between the lens barrels in the axial direction is maintained by way of magnetic adsorption.

It may be appreciated that when the main lens barrel 100 is inserted into the front optical lens barrel 210, the limiter 500 is fixed to the front optical lens barrel 210 and abuts against an outer wall of the main lens barrel 100.

It should be noted that the limiter 500 in the embodiment is configured to fix the lens barrel initially during assembly. After alignment is completed, the main lens barrel 100 may be fixed to the front optical lens barrel 210 by adhesives or threaded fasteners.

When the front optical lens barrel 210 is movable relative to the main lens barrel 100, in some embodiments, the particle detection device further includes a limiter 500. The limiter 500 is connected to one of the front optical lens barrel 210 and the main lens barrel 100, and is capable of acting on the other of the front optical lens barrel 210 and the main lens barrel 100, to limit relative rotation between the front optical lens barrel 210 and the main lens barrel 100 along a circumferential direction. For example, the front optical lens barrel 210 inserted into the main lens barrel 100 is taken as an example, the limiter 500 is the above-mentioned pin or screw and is fixed to the main lens barrel 100, an outer wall surface of the front optical lens barrel 210 is provided with a flat surface, and the pin or screw abuts against the flat surface; or the outer wall surface of the front optical lens barrel 210 is provided with a groove, and the pin or screw is inserted into the groove.

Specifically, in some embodiments, the other of the front optical lens barrel 210 and the main lens barrel 100 has a limiting groove 212. The limiter 500 is inserted into the limiting groove 212, to limit rotation along the circumferential direction. Furthermore, a distance between groove walls at two sides of the limiting groove 212 gradually decreases along a radial direction pointing to the central axis of the main channel 110. The limiter 500 abuts against the groove walls at the two sides of the limiting groove 212, which may also achieve centering of the front optical lens barrel 210 and the main lens barrel 100. Specifically, with reference to FIG. 4, the limiting groove 212 is arranged in the outer wall of the front optical lens barrel 210 and extends along an axial direction of the lens barrel. A cross section of the limiting groove 212 is set to have a V shape, which facilitates processing.

Based on the front optical lens barrel 210 forming a nested connection with the main lens barrel 100 as described above, the main lens barrel 100 may also be used to connect at least a part of components in the rear optical assembly 300. With reference to FIG. 4 and FIG. 5, in some embodiments, the rear optical assembly 300 includes a rear optical module. The rear optical module includes a first light converging lens 320 and a first diaphragm 330. The first light converging lens 320 is configured to converge light, thereby reducing a spot illuminated onto the light receiving device, which may further reduce a target surface area of the light receiving device, and may reduce volume and cost of the light receiving device finally. At least one of an incoming surface and an outgoing surface of the first light converging lens 320 is a non-spheric surface. In the embodiment, the first light converging lens 320 uses a non-spheric lens, which is beneficial to converge light better. The first diaphragm 330 is configured to block stray light from illuminating the light receiving device, thereby improving quality of the optical signal collected by the light receiving device, which is beneficial to improve an optical signal-to-noise ratio (SNR). The light receiving device may be a photodetector configured to receive the illuminating light that exits from the flow chamber assembly 400 and passes through the first light converging lens 320 and the first diaphragm 330.

In the embodiment, the main lens barrel 100 is further used to install at least the first diaphragm 330. Specifically, the particle detection device further includes a pressing member. The pressing member is connected to the main lens barrel 100, to clamp the first diaphragm 330 between the main lens barrel 100 and the pressing member, which further increases integrated installation functions of the main lens barrel 100. Furthermore, compared to manners of fixing through adhesives and threaded fasteners, the clamping manner may be more convenient for disassembly and assembly. It should be noted that the pressing member may be a rear optical lens barrel of the rear optical assembly 300, or may be other structures designed separately.

Based on the first diaphragm clamped between the main lens barrel 100 and the pressing member, with reference to FIG. 5, in some embodiments, the first light converging lens 320 is connected to the main lens barrel 100, and is located between the flow chamber assembly 400 and the first diaphragm 330. In this way, the illuminating light exited from the flow chamber assembly 400 may be converged by the first light converging lens 320, and then pass through the first diaphragm 330, which may reduce areas of openings on the first diaphragm 330. On the other hand, the main lens barrel 100 is used as an installation base to install the first light converging lens 320 of the rear optical module, so that both the first light converging lens 320 and the front optical assembly 200 may use the main lens barrel 100 as a reference, which facilitates ensuring centering of the optical path. Further, assembly accuracy may be ensured through processing accuracy of the main lens barrel 100, which may further reduce the number of alignment operations.

Based on the first diaphragm clamped between the main lens barrel 100 and the pressing member, in some embodiments, the pressing member is inserted into the main channel 110 to press the first diaphragm 330. With reference to FIG. 4 and FIG. 5, the main channel 110 includes a first channel section 111 and a second channel section 112 sequentially arranged along an axial direction of the main channel 110. That is, the first channel section 111 is located at a left side of the second channel section 112 in the figure. A diameter of the first channel section 111 is less than a diameter of the second channel section 112, to form an abutting surface 113 at a conjunction of the first channel section 111 and the second channel section 112. A front end of the pressing member is inserted into the second channel section 112, to press the first diaphragm 330 against the abutting surface 113. In this way, the pressing member is connected to the main lens barrel 100 by way of inserting therein, which may simplify assembly structures between the pressing member and the main lens barrel 100 and facilitate assembly.

Specifically, with respect to the embodiment shown in the figure, the first channel section 111 may also be used to assemble the first light converging lens 320. It should be noted that besides the first channel section 111 and the second channel section 112, the main channel 110 may be provided with other channel sections, such as a third channel section arranged at a left side of the first channel section 111 for the front optical lens barrel 210 to insert therein.

In some specific embodiments, with reference to FIG. 2, FIG. 3 and FIG. 5, a wall of the second channel section 112 is provided with a first hole 120 penetrating to an outer surface of the main lens barrel 100. The first hole 120 is configured for the first diaphragm 330 to move relative to the main lens barrel 100 along a penetration direction of the first hole 120. The penetration direction is the above-mentioned first direction. First holes 120 are arranged in walls at one side or opposite two sides of the second channel section 112, and a movement direction of the first diaphragm 330 is specifically a front-to-rear direction. Through movement in the above-mentioned direction, on one hand, the first diaphragm 330 may enter or exit from the main lens barrel 100, thereby achieving assembly of the first diaphragm 330; on the other hand, fine-adjustment of position may also be performed after the first diaphragm 330 is located between the main lens barrel 100 and the pressing member, to adjust a position between the first diaphragm 330 and the first light converging lens 320. It should be noted that since the first diaphragm 330 is movable from a side relative to the main lens barrel 100, it is unnecessary for the pressing member to be completely come out of the main channel 110 when the first diaphragm 330 is assembled or adjusted, and the pressing member only needs to move backward relative to the main lens barrel 100 by a short distance, which facilitates operations.

Based on the first diaphragm clamped between the main lens barrel 100 and the pressing member, in some embodiments, the pressing member is detachably connected to the main lens barrel 100. Further, the first diaphragm 330 is configured to be movable relative to the main lens barrel 100 along the above-mentioned first direction when the pressing member is in a non-pressing state, thereby achieving installation or adjustment of the first diaphragm 330. The pressing member in the embodiment may be detachably connected to the main lens barrel 100 by way of the above-mentioned insertion-fit, or may be detachably connected to the main lens barrel 100 through threaded fasteners, etc.

It should be noted that "non-pressing state" mentioned here includes a state where the pressing member is completely separated from the main channel 110, and also includes a state where there is a gap between the pressing member and the abutting surface 113 to allow movement of the first diaphragm 330.

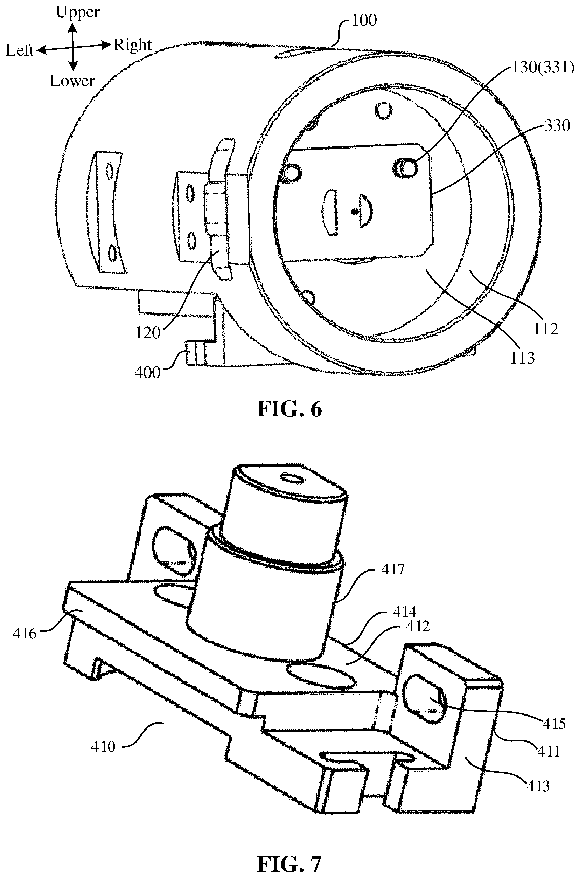

In order to achieve positioning of the first diaphragm 330 during movement, with reference to FIG. 4 and FIG. 6, in some embodiments, one of the main lens barrel 100 and the first diaphragm 330 is provided with a first positioning component 130, the other of the main lens barrel 100 and the first diaphragm 330 is provided with a second positioning component 331. The first diaphragm 330 is movable relative to the main lens barrel 100 along the first direction (such as a left-right direction of FIG. 6) through the first positioning component 130 and the second positioning component 331. In some specific embodiments, the first positioning component 130 includes a positioning protrusion extended along a direction parallel to the axial direction of the main channel 110, such as a positioning post arranged on the abutting surface 113, and the second positioning component 331 includes a positioning recess extended along the first direction, such as a strip-shaped positioning groove arranged in the first diaphragm 330. The positioning protrusion is inserted into the positioning recess and may slide along an extension direction of the positioning recess, to achieve positioning. It may be appreciated that the main lens barrel 100 may also be provided with a positioning groove and the first diaphragm 330 is provided with a positioning post. Based on the above-mentioned structure, the first diaphragm 330 in the embodiment only needs to move along the left-right direction, which further reduces the number of alignment operations.

It should be noted that when the abutting surface 113 is provided with a positioning post, a vertical reference plane parallel to the axial direction of the main channel 110 is established, and a projection of the first hole 120 in the reference plane should cover and should be wider than a projection of the positioning post in the reference plane. In this way, the first diaphragm 330 may be offset from the positioning post along the axial direction, enter the main channel 110 along the first direction, and then move toward the abutting surface 113 along the axial direction, so that the positioning post is inserted into the positioning groove.

In some other embodiments, one of the pressing member and the first diaphragm 330 may be provided with a first positioning component 130, the other of the pressing member and the first diaphragm 330 may be provided with a second positioning component 331. The first diaphragm 330 is movable relative to the main lens barrel 100 along the first direction through the first positioning component 130 and the second positioning component 331.

Based on the front optical lens barrel 210 forming a nested connection with the main lens barrel 100 as described above, optical components of the rear optical assembly 300 may also be installed in other positions. For example, in some embodiments, the rear optical assembly 300 includes a rear optical module and the rear optical module includes the above-mentioned first light converging lens 320 and the above-mentioned first diaphragm 330. Each of the first light converging lens 320, the first diaphragm 330 and the light receiving assembly is connected to the main lens barrel 100. In this way, each of the first light converging lens 320, the first diaphragm 330, the light receiving assembly and the front optical assembly 200 uses the main lens barrel 100 as a reference, which facilitates ensuring centering of the optical path, and assembly accuracy may be ensured through processing accuracy of the main lens barrel 100, which may further reduce alignment operation.

In some specific embodiments, a wall of the second channel section 112 is provided with a first hole 120 penetrating to an outer surface of the main lens barrel 100. The first hole 120 is configured for the first diaphragm 330 to move relative to the main lens barrel 100 along a penetration direction. The penetration direction is the above-mentioned first direction. First holes 120 are arranged in walls at one side or opposite two sides of the second channel section 112. A movement direction of the first diaphragm 330 is specifically a front-to-rear direction. Through movement in the above-mentioned direction, on one hand, the first diaphragm 330 may enter or exit from the main lens barrel 100, thereby achieving assembly of the first diaphragm 330; on the other hand, fine-adjustment of position may also be performed after the first diaphragm 330 is located between the main lens barrel 100 and the pressing member, to adjust a position between the first diaphragm 330 and the first light converging lens 320. Since the first diaphragm 330 is movable from a side of the main lens barrel 100, it is unnecessary to enter or exit from the main lens barrel 100 from a rear end of the main lens barrel 100, then it is unnecessary for disassemble or move optical components behind the first diaphragm 330 when the first diaphragm 330 is assembled or adjusted.

Based on the above-mentioned structure, in order to achieve fixing of the first diaphragm 330, at least one end of the first diaphragm 330 is extended out of the first hole 120. The particle detection device further includes a fixing member. The fixing member acts on an extended part of the first diaphragm 330, to fix the first diaphragm 330 to the main lens barrel 100. For example, the fixing member may be a threaded fastener. The first diaphragm 330 is provided with a via and an outer side of the main lens barrel 100 is provided with an axial threaded hole. The threaded fastener passes through the via and is screwed into the threaded hole, to fix the first diaphragm 330 to the main lens barrel 100. It may be understood that first holes 120 are arranged in walls at opposite two sides of the main lens barrel 100, and two ends of the first diaphragm 330 are extended out of corresponding first holes 120 respectively and are fixed by fixing members respectively, so that stable connection of the first diaphragm 330 is achieved.

The above-mentioned embodiments are described based on the front optical lens barrel 210 forming a nested connection with the main lens barrel 100. Next, descriptions will be made based on a rear optical lens barrel 310 forming a nested connection with the main lens barrel 100. Also, with reference to FIG. 4 and FIG. 5, a particle detection device according to a second embodiment of the invention includes a main lens barrel 100, a front optical assembly 200, a rear optical assembly 300, a flow chamber assembly 400, a light source 700, and a light receiving assembly. The flow chamber assembly 400, the light source 700 and the light receiving assembly may be understood with reference to the first embodiment. The front optical assembly 200 of the embodiment may be understood with reference to the first embodiment, or the front optical lens barrel 210 may not be provided, and the front optical module may be directly connected to the main lens barrel 100, or may be connected to the main lens barrel 100 through other members different from the front optical lens barrel 210.

The rear optical assembly 300 includes a rear optical lens barrel 310 and a rear optical module. The rear optical lens barrel 310 has at least a first rear optical channel 311. The rear optical module is at least partially arranged in the first rear optical channel 311. An illuminating light exited from the outgoing side of the detection component 420 passes through the rear optical module, and the rear optical module shapes the illuminating light exited from the outgoing side of the detection component 420. The rear optical lens barrel 310 forms a nested connection with the main lens barrel 100. After the rear optical lens barrel 310 forms a nested connection with the main lens barrel 100, a central axis of the first rear optical channel 311, the central axis of the main channel 110 and the optical axis of the front optical module are substantially coaxial.

There are two solutions for the nested connection between the rear optical lens barrel 310 and the main lens barrel 100.

In one solution, a cross section of the main channel 110 has a circular shape, and the rear optical lens barrel 310 is at least partially located in the main channel 110. In other words, the solution is a situation where the rear optical lens barrel 310 is inserted into the main lens barrel 100. An example is shown in FIG. 5 where a rear end of the rear optical lens barrel 310 is inserted into a front end of the main channel 110. In some other embodiments, the rear optical lens barrel 310 is entirely inserted into the main lens barrel 100. In order to adapt to insertion-fit, an outer profile of an insertion part of the rear optical lens barrel 310 is set to be circular, and matches shape and size of the main channel 110. In the embodiment shown in the figure, a front end of the rear optical lens barrel 310 is set to have a cylindrical structure. After the rear optical lens barrel 310 is assembled to the main lens barrel 100, a displacement between the rear optical lens barrel 310 and the main lens barrel 100 in a radial plane is limited by lens barrel walls abutted mutually. Therefore, ensuring accuracy of an outer circle of the rear optical lens barrel 310 and accuracy of an inner circle of the main lens barrel 100 may be sufficient to achieve centering of the lens barrels. Further, in combination with processing accuracy and assembly accuracy, accurate installation between optical components and the lens barrels is ensured. Therefore, structures may be simplified and the number of alignment operations and alignment cost may be significantly reduced. It may be appreciated that in the solution, cross sections of both the main channel 110 and the insertion part of the rear optical lens barrel 310 are circular, and compared to other cavities and insertion parts with non-circular cross sections (such as a polygonal cavity including rectangles, or a special-shaped cavity of which an inner wall surface includes flat and arc surfaces), a high processing accuracy may be ensured through a relatively simple process. For example, a circular channel or circular outer profile with a high accuracy may be obtained by rotating a tool relative to a blank to cut the blank.

In another solution, a cross section of the first rear optical channel 311 has a circular shape, and the main lens barrel 100 is partially located in the first rear optical channel 311. In other words, the solution is a situation where the main lens barrel 100 is inserted into the rear optical lens barrel 310. For example, a front end of the main lens barrel 100 is inserted into a rear end of the first rear optical channel 311. In order to adapt to insertion-fit, an outer profile of an insertion part of the main lens barrel 100 is set to be circular, and matches shape and size of the first rear optical channel 311. For example, the main lens barrel 100 is set to have a cylindrical structure as a whole. Similarly, the solution may also achieve a purpose of simplifying structures and reduce the number of alignment operations and alignment cost. It should be noted that shape of the cross section of the main channel 110 is not limited to being circular in the solution.

It should be noted that the rear optical assembly 300 usually also includes a single rear optical lens barrel 310, the main lens barrel 100 forms a nested connection with the single rear optical lens barrel 310. In this way, at least a part of components of the rear optical module may be separately assembled to the rear optical lens barrel 310 in advance, and then the rear optical lens barrel 310 forms a nested connection with the main lens barrel 100, which facilitates assembly.

Based on the rear optical lens barrel 310 forming a nested connection with the main lens barrel 100 as described above, with reference to FIG. 4 and FIG. 5, in some embodiments, the rear optical module includes a first light converging lens 320 and a first diaphragm 330. The first light converging lens 320 is configured to converge light, thereby reducing a spot illuminated onto the light receiving device, which may further reduce a target surface area of the light receiving device, and may reduce volume and cost of the light receiving device finally. At least one of an incoming surface or an outgoing surface of the first light converging lens 320 is a non-spheric surface. In the embodiment, the first light converging lens 320 uses a non-spheric lens, which is beneficial for better light converging. The first diaphragm 330 is configured to block stray light from illuminating the light receiving device, thereby improving quality of the optical signal collected by the light receiving device, which is beneficial to improve the optical SNR. The light receiving device may be a photodetector configured to receive the illuminating light that exits from the flow chamber assembly 400 and passes through the first light converging lens 320 and the first diaphragm 330.

In the embodiment, the light receiving assembly is connected to the rear optical lens barrel 310, and the first diaphragm 330 is arranged between the main lens barrel 100 and the rear optical lens barrel 310. It should be noted that only a position of the first diaphragm 330 relative to the main lens barrel 100 and the rear optical lens barrel 310 is described here, and a connection relationship there-between is not specifically limited. The first diaphragm 330 may be fixed to the main lens barrel 100 or the rear optical lens barrel 310, or the first diaphragm 330 may fixed through the main lens barrel 100 and the rear optical lens barrel 310, for example by way of clamping.

In some specific embodiments, the first diaphragm 330 is clamped between the main lens barrel 100 and the rear optical lens barrel 310, which further increases integrated installation functions of the main lens barrel 100. Furthermore, compared to manners of fixing through adhesives and threaded fasteners, the clamping manner may be more convenient for disassembly and assembly.

Based on the first diaphragm 330 clamped between the main lens barrel 100 and the rear optical lens barrel 310, in some embodiments, the rear optical lens barrel 310 is inserted into the main channel 110 to press the first diaphragm 330. With reference to FIG. 4 and FIG. 5, the main channel 110 includes a first channel section 111 and a second channel section 112 sequentially arranged along an axial direction of the main channel 110. That is, the first channel section 111 is located at a left side of the second channel section 112 in the figure. Diameter of the first channel section 111 is less than diameter of the second channel section 112, to form an abutting surface 113 at a conjunction of the first channel section 111 and the second channel section 112. A front end of the rear optical lens barrel 310 is inserted into the second channel section 112, to press the first diaphragm 330 against the abutting surface 113. In this way, the rear optical lens barrel 310 is connected to the main lens barrel 100 by way of inserting therein, which may simplify assembly structures between the rear optical lens barrel 310 and the main lens barrel 100 and facilitate assembly.

It should be noted that besides the first channel section 111 and the second channel section 112, the main channel 110 may be provided with other channel sections, such as a third channel section arranged at a left side of the first channel section 111 for the front optical lens barrel 210 to insert therein.

In some specific embodiments, with reference to FIG. 2, FIG. 3 and FIG. 5, a wall of the second channel section 112 is provided with a first hole 120 penetrating to an outer surface of the main lens barrel 100. The first hole 120 is configured for the first diaphragm 330 to move relative to the main lens barrel 100 along a penetration direction. The penetration direction is the above-mentioned first direction. First holes 120 are arranged in walls at one side or opposite two sides of the second channel section 112, and a movement direction of the first diaphragm 330 is specifically a front-to-rear direction. Through movement in the above-mentioned direction, on one hand, the first diaphragm 330 may enter or exit from the main lens barrel 100, thereby achieving assembly of the first diaphragm 330; on the other hand, fine-adjustment of position may also be performed after the first diaphragm 330 is located between the main lens barrel 100 and the rear optical lens barrel 310, to adjust a position between the first diaphragm 330 and the first light converging lens 320. It should be noted that since the first diaphragm 330 is movable from a side relative to the main lens barrel 100, it is unnecessary for the rear optical lens barrel 310 to be completely come out of the main channel 110 when the first diaphragm 330 is assembled or adjusted, and the rear optical lens barrel 310 only needs to move backward relative to the main lens barrel 100 by a short distance, which facilitates operations.

Based on the first diaphragm 330 clamped between the main lens barrel 100 and the rear optical lens barrel 310, in some embodiments, the rear optical lens barrel 310 is detachably connected to the main lens barrel 100. Further, the first diaphragm 330 is configured to be movable relative to the main lens barrel 100 along the first direction when the rear optical lens barrel 310 is in a non-pressing state, thereby achieving installation or adjustment of the first diaphragm 330. The rear optical lens barrel 310 in the embodiment may be detachably connected to the main lens barrel 100 by way of the above-mentioned insertion-fit, or may be detachably connected to the main lens barrel 100 through threaded fasteners, etc.

It should be noted that "non-pressing state" mentioned here includes a state where the rear optical lens barrel 310 is completely separated from the main channel 110, and also includes a state where there is a gap between the rear optical lens barrel 310 and the abutting surface 113 to allow movement of the first diaphragm 330.

In order to achieve positioning of the first diaphragm 330 during movement, with reference to FIG. 4 and FIG. 6, in some embodiments, one of the main lens barrel 100 and the first diaphragm 330 is provided with a first positioning component 130, the other of the main lens barrel 100 and the first diaphragm 330 is provided with a second positioning component 331. The first diaphragm 330 is movable relative to the main lens barrel 100 along the first direction (such as a left-right direction of FIG. 6) through the first positioning component 130 and the second positioning component 331. In some specific embodiments, the first positioning component 130 includes a positioning protrusion extended along a direction parallel to the axial direction of the main channel 110, such as a positioning post arranged on the abutting surface 113, and the second positioning component 331 includes a positioning recess extended along the first direction, such as a strip-shaped positioning groove arranged in the first diaphragm 330. The positioning protrusion is inserted into the positioning recess and may slide along an extension direction of the positioning recess, to achieve positioning. It may be appreciated that the main lens barrel 100 may also be provided with a positioning groove and the first diaphragm 330 is provided with a positioning post. Based on the above-mentioned structure, the first diaphragm 330 in the embodiment only needs to move along the left-right direction, which further reduces the number of alignment operations.

It should be noted that when the abutting surface 113 is provided with a positioning post, a vertical reference plane parallel to the axial direction of the main channel 110 is established, and a projection of the first hole 120 in the reference plane should cover and should be wider than a projection of the positioning post in the reference plane. In this way, the first diaphragm 330 may be offset from the positioning post along the axial direction, enter the main channel 110 along the first direction, and then move toward the abutting surface 113 along the axial direction, so that the positioning post is inserted into the positioning groove.

In some other embodiments, one of the rear optical lens barrel 310 and the first diaphragm 330 may be provided with a first positioning component 130, the other of the rear optical lens barrel 310 and the first diaphragm 330 may be provided with a second positioning component 331. The first diaphragm 330 is movable relative to the main lens barrel 100 along the first direction through the first positioning component 130 and the second positioning component 331.

The above-mentioned embodiments describe a solution where the first diaphragm 330 is pressed through the rear optical lens barrel 310 and the main lens barrel 100. In some alternative embodiments, the first diaphragm 330 may also be pressed through a separate fixing member. A wall of the main lens barrel 100 is provided with a first hole 120 penetrating to an outer surface of the main lens barrel 100. For example, the first hole 120 is arranged in a wall of the second channel section 112. At least one end of the first diaphragm 330 is extended out of the first hole 120. The particle detection device further includes a fixing member. The fixing member is connected to the main lens barrel 100 and acts on an extended part of the first diaphragm 330, to fix the first diaphragm 330 to the main lens barrel 100. Or, the fixing member is connected to the rear optical lens barrel 310 and acts on the extended part of the first diaphragm 330, to fix the first diaphragm 330 to the rear optical lens barrel 310.

The fixing member may be a threaded fastener. For example, the first diaphragm 330 is provided with a via and an outer side of the main lens barrel 100 is provided with an axial threaded hole. The threaded fastener passes through the via and is screwed into the threaded hole, to fix the first diaphragm 330 to the main lens barrel 100. It may be appreciated that first holes 120 are arranged in walls at opposite two sides of the main lens barrel 100. Two ends of the first diaphragm 330 are extended out of corresponding first holes 120 respectively and are fixed by fixing members respectively, so that stable connection of the first diaphragm 330 is achieved.

Based on the first diaphragm arranged between the main lens barrel 100 and the rear optical lens barrel 310, with reference to FIG. 5, in some embodiments, the first light converging lens 320 is connected to the main lens barrel 100, and is located between the flow chamber assembly 400 and the first diaphragm 330. In this way, the illuminating light exited from the flow chamber assembly 400 may be converged by the first light converging lens 320, and then pass through the first diaphragm 330, which may reduce areas of openings on the first diaphragm 330. Specifically, with respect to the embodiment shown in the figure, the first light converging lens 320 is assembled to the first channel section 111.

In some other embodiments, the first light converging lens 320 is connected to the rear optical lens barrel 310 and is located between the first diaphragm 330 and the light receiving device, thereby improving integration of the rear optical assembly 300.

The above-mentioned embodiments describe a solution where a part of components of the rear optical module are connected to the rear optical lens barrel 310. In some embodiments, all of optical components of the rear optical module may also be connected to the rear optical lens barrel 310. Specifically, the rear optical module includes the above-mentioned first light converging lens 320 and the above-mentioned first diaphragm 330. Both the first light converging lens 320 and the first diaphragm 330 are connected to the rear optical lens barrel 310. Furthermore, the light receiving assembly is also connected to the rear optical lens barrel 310. In this way, the rear optical assembly 300 may be assembled in advance, and then the rear optical assembly 300 is connected to the main lens barrel 100, to further improve integration of the rear optical assembly 300.

It should be noted that the above-mentioned solution based on the front optical lens barrel 210 forming a nested connection with the main lens barrel 100 and the above-mentioned solution based on the rear optical lens barrel 310 forming a nested connection with the main lens barrel 100 may be combined with each other. For example, when the front optical lens barrel 210 forming a nested connection with the main lens barrel 100 is used as a basis, the rear optical assembly 300 includes the rear optical lens barrel 310 and the rear optical module. The rear optical module is at least partially connected to the rear optical lens barrel 310. The rear optical lens barrel 310 forms a nested connection with the main lens barrel 100, and specific connection solution may be understood with reference to the second embodiment and corresponding specific embodiments. Furthermore, the rear optical lens barrel 310 may also be used as the pressing member of the first embodiment to press the first diaphragm 330, and specific pressing solution may also be understood with reference to the second embodiment and corresponding specific embodiments. Similarly, when the rear optical lens barrel 310 forming a nested connection with the main lens barrel 100 is used as a basis, the front optical assembly 200 may include the front optical lens barrel 210 and the front optical module. The front optical module is connected to the front optical lens barrel 210. The front optical lens barrel 210 forms a nested connection with the main lens barrel 100, and specific connection solution may be understood with reference to the first embodiment and corresponding specific embodiments. It may be appreciated that when both the front optical lens barrel 210 and the rear optical lens barrel 310 form a nested connection with the main lens barrel 100, both the front optical assembly 200 and the rear optical assembly 300 will be installed by using the main lens barrel 100 as a reference. Only processing accuracy of the main lens barrel 100 and assembly accuracy of the main lens barrel 100 with both the front optical lens barrel 210 and the rear optical lens barrel 310 need to be ensured, so that centering of the front optical lens barrel 210 and the rear optical lens barrel 310 may be ensured. Compared to a manner of adjusting various modules separately, the number of adjustment operations and adjustment cost may be significantly reduced, while assembly operation may also be simplified.

Next, descriptions will be made based on the flow chamber assembly 400 connected to the main lens barrel 100. With reference to FIG. 2 to FIG. 5, a particle detection device according to a third embodiment includes a main lens barrel 100, a front optical assembly 200, a rear optical assembly 300, a flow chamber assembly 400, a light source 700, and a light receiving assembly. The flow chamber assembly 400 includes a solution injection component 410, a detection component 420 and a solution discharge component 430 sequentially arranged along a flow direction of a sample solution. The solution injection component 410 is configured for a sample solution to be tested to flow into the detection component 420. Light exited from the front optical assembly 200 illuminates the sample solution to be tested from a side of the detection component 420, and the illuminated sample solution to be tested is discharged from the solution discharge component 430 to a solution discharge pipe.

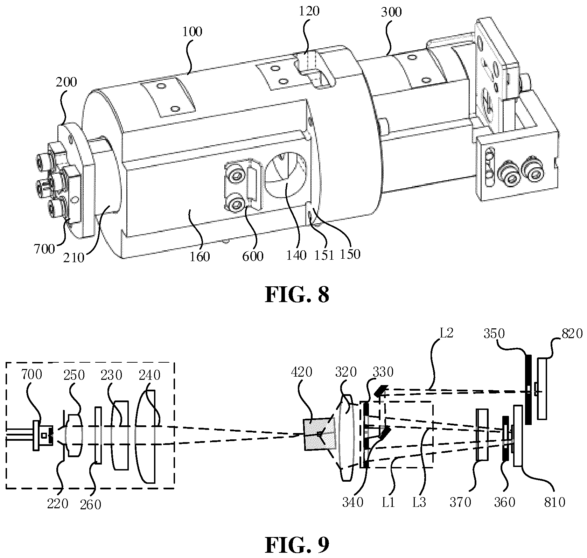

Specifically, with reference to FIG. 8, a wall of the main lens barrel 100 is provided with a second hole 140 penetrating the wall. The detection component 420 may enter the main channel 110 through the second hole 140. The second hole 140 may be configured as a strip-shaped hole extended along the first direction, to adapt to movement of the flow chamber assembly 400 in the first direction. Furthermore, a part of the solution injection component 410 may also be arranged in the second hole 140 and passes through the second hole 140.

The front optical assembly 200 includes a front optical lens barrel 210 and a front optical module. The front optical lens barrel 210 has a front optical channel 211, and the front optical module is arranged in the front optical channel 211. An illuminating light passes through the front optical module. The front optical module shapes the illuminating light, and the shaped light enters the detection component 420 from the incoming side. The rear optical assembly 300 includes a rear optical lens barrel 310 and a rear optical module. The rear optical lens barrel 310 has at least a first rear optical channel 311. The rear optical module is at least partially arranged in the first rear optical channel 311. The rear optical module has at least a first optical axis. In other words, in some embodiments, the rear optical module may also have a second optical axis, which will be explained in subsequent embodiments. The illuminating light exited from an outgoing side of the detection component 420 passes through the rear optical module, and the rear optical module shapes the illuminating light exited from the outgoing side of the detection component 420. In the embodiment, the front optical lens barrel 210 forms a nested connection with the main lens barrel 100, the rear optical lens barrel 310 forms a nested connection with the main lens barrel 100, and a central axis of the main channel 110, an optical axis of the front optical module, the first optical axis of the rear optical module, a central axis of the front optical lens barrel 210 and a central axis of the rear optical lens barrel 310 are substantially coaxial. In some embodiments, the front optical module includes multiple lenses and other components, the rear optical assembly 300 includes the rear optical module, and the rear optical module includes a first light converging lens 320, a first diaphragm 330, and other components.

In the embodiment, at least the detection component 420 of the flow chamber assembly 400 is located in the main channel 110, so that the illuminating light exited from the front optical assembly 200 may illuminate the detection component 420 in the main channel 110, and the illuminating light exited after it illuminates the sample solution to be tested may be shaped by the rear optical module. The central axis of the main channel 110 (that is, the optical axis of the front optical module, the first optical axis of the rear optical module, the central axis of the front optical lens barrel 210 or the central axis of the rear optical lens barrel 310) is located at two ends of the detection component 420 along the flow direction of the sample solution to be tested. That is, after assembly of the flow chamber assembly 400, the main lens barrel 100, the front optical assembly 200 and the rear optical assembly 300 is completed, positions of the detection component 420, the front optical assembly 200 and the rear optical assembly 300 correspond to each other along the flow direction of the sample solution to be tested, to ensure that the illuminating light exited from the front optical assembly 200 may illuminate the sample solution to be tested in the detection component 420, and the illuminating light exited from the detection component 420 may also pass through the rear optical module accurately, thereby omitting an operation of adjusting the flow chamber assembly 400 in the flow direction of the sample solution to be tested, and making assembly and alignment operations simpler.

Furthermore, in the embodiment, the main lens barrel 100 is used as a medium to connect the flow chamber assembly 400, the front optical assembly 200 and the rear optical assembly 300. Each of the flow chamber assembly 400, the front optical assembly 200 and the rear optical assembly 300 uses the main lens barrel 100 as an installation reference, so that the flow chamber assembly 400, the front optical assembly 200 and the rear optical assembly 300 may be accurately positioned through the main lens barrel 100, which is beneficial to reduce the number of alignment operations and reducing alignment cost.

Based on the third embodiment, in some embodiments, one of the main lens barrel 100 and the flow chamber assembly 400 is provided with a third positioning component, and the other of the main lens barrel 100 and the flow chamber assembly 400 is provided with a fourth positioning component. The flow chamber assembly 400 may be positioned to the main lens barrel 100 through the third positioning component and the fourth positioning component. The flow chamber assembly 400 is configured to be movable relative to the main lens barrel 100 along the first direction, thereby achieving adjustment on centering of the light exited from the front optical assembly 200 and the sample solution to be tested. Specifically, a flow channel in the detection component 420 is arranged along a vertical direction. Particles in the sample solution to be tested pass through the flow channel in a queue within the flow channel, so that the particles are illuminated sequentially. After height of the detection component 420 is positioned by the third positioning component and the fourth positioning component, it only needs to further define a position of the detection component 420 relative to the light along the first direction (such as a left-right direction of FIG. 6), so that the light exited from the front optical assembly 200 may accurately illuminate the particles in the sample solution to be tested. In some embodiments, the flow chamber assembly 400 and the main lens barrel 100 are also provided with limiting structures along the first direction respectively. After the flow chamber assembly 400 is installed on the main lens barrel 100, a position of the flow chamber assembly 400 along the first direction has been determined without adjustment. However, in the embodiment, the flow chamber assembly 400 is movable along the first direction through the third positioning component and the fourth positioning component, to adjust the position. Since the particles have an extremely small diameter, requirements on installation accuracy of the flow chamber assembly 400 and the main lens barrel 100 along the first direction may be significantly lowered by using the method of the embodiment, to reduce processing cost.

Based on the main lens barrel 100 and the flow chamber assembly 400 positioned through the third positioning component and the fourth positioning component, with reference to FIG. 7 and FIG. 8, in some embodiments, the solution injection component 410 is provided with a third positioning component and the main lens barrel 100 is provided with a fourth positioning component. The third positioning component includes a third positioning surface 412 of the solution injection component 410, and the fourth positioning component includes a fourth positioning surface 160 of the main lens barrel 100. The third positioning surface 412 is in contact with the fourth positioning surface 160, to limit a relative movement between the flow chamber assembly 400 and the main lens barrel 100 along the flow direction of the sample solution to be tested. Furthermore, the flow chamber assembly 400 and the main lens barrel 100 may slide along the first direction in a plane perpendicular to the flow direction of the sample solution to be tested.

In some other embodiments, the third positioning component and the fourth positioning component may also be configured to position the flow chamber assembly 400 in the axial direction. With reference to FIG. 7 and FIG. 8, the third positioning component includes a first positioning surface 411 of the solution injection component 410 that is perpendicular to the axial direction of the main channel 110, and the fourth positioning component includes a second positioning surface 150 of the main lens barrel 100 that is perpendicular to the axial direction of the main channel. The first positioning surface 411 is in contact with the second positioning surface 150, to limit a relative movement between the flow chamber assembly 400 and the main lens barrel 100 along the axial direction of the main channel 110.

Based on the main lens barrel 100 and the flow chamber assembly 400 positioned through the third positioning component and the fourth positioning component, in some specific embodiments, the third positioning component includes the above-mentioned first positioning surface 411 and the above-mentioned third positioning surface 412, and the fourth positioning component includes the above-mentioned second positioning surface 150 and the above-mentioned fourth positioning surface 160, so that displacements of the flow chamber assembly 400 along the axial direction and the flow direction of the sample solution to be tested are limited.

The flow chamber assembly 400 is usually arranged vertically, and the sample solution to be tested flows from bottom to top. Therefore, the solution injection component 410 is connected to a lower side of the main lens barrel 100. In order to support and limit the flow chamber assembly 400, the particle detection device further includes a support member 600 connected to the main lens barrel 100. The support member 600 abuts the solution injection component 410 against the fourth positioning surface 160 along the flow direction of the sample solution to be tested, and abuts the solution injection component 410 against the second positioning surface 150 along the axial direction of the main channel 110. Specifically, with respect to the embodiment shown in FIG. 7 and FIG. 8, the support member 600 is configured as a pressing sheet structure with an end connected to the lower side of the main lens barrel 100 (such as the fourth positioning surface 160) and the other end configured as an elastic end. The elastic end abuts against the solution injection component 410, to fully limit the position in the vertical direction by cooperating with the fourth positioning surface 160 on one hand, and fully limit the position in the axial direction by cooperating with the fourth positioning surface 160 on the other hand. The second installation part 414 is further formed with a flange 416. The elastic end abuts against the flange 416. In the embodiment, by setting an elastic force of the support member 600, when the support member 600 elastically abuts against the solution injection component 410, the flow chamber assembly 400 is movable relative to the main lens barrel 100 along the first direction. In this way, it is unnecessary for the operator to support the flow chamber assembly 400 during adjustment, which facilitates operations.

When the fourth positioning component includes the above-mentioned second positioning surface 150 and the above-mentioned fourth positioning surface 160, with reference to FIG. 7 and FIG. 8, in some embodiments, the second positioning surface 150 and the fourth positioning surface 160 on the main lens barrel 100 are formed at the outer side of the lens barrel, for example, an installation groove may be formed in an outer side wall of the main lens barrel 100. Different wall surfaces of the installation groove form the second positioning surface 150 and the fourth positioning surface 160 respectively. For example, when the main lens barrel 100 has the second positioning surface 150, a groove wall surface of the installation groove perpendicular to the axial direction of the main lens barrel 100 is configured as the second positioning surface. When the main lens barrel 100 has the fourth positioning surface 160, a groove wall surface of the installation groove perpendicular to the flow direction of the sample solution to be tested is configured as the fourth positioning surface 160. The installation groove may be formed by way of removing materials, to facilitate machining.

The solution injection component 410 may be formed by injection molding or other processes. The solution injection component 410 specifically includes a first installation part 413 and a second installation part 414. The first installation part 413 is perpendicular to the axial direction of the main channel 110 (for example, arranged vertically. A side surface (such as a rear side surface) of the first installation part 413 is configured as the first positioning surface 411, and an upper side surface of the first installation part 413 is the above-mentioned third positioning surface 412. The second installation part 414 is connected to a side of the first installation part 413 and is perpendicular to the flow direction of the sample solution to be tested (for example, arranged horizontally). A side surface (such as an upper side surface) of the second installation part 414 is configured as the above-mentioned third positioning surface 412. The detection component 420 is connected to the second installation part 414.

The main lens barrel 100 of the embodiment is provided with the above-mentioned installation groove, and different groove wall surfaces of the installation groove are configured as the second positioning surface 150 and the fourth positioning surface 160 respectively. The first installation part 413 and the second installation part 414 are at least partially located in the installation groove respectively. The first positioning surface 411 is in contact with the second positioning surface 150, and the third positioning surface 412 is in contact with the fourth positioning surface 160.

In order to achieve fixing of the flow chamber assembly 400, in some embodiments, the particle detection device further includes a locking member. The locking member is connected to the main lens barrel 100 and the flow chamber assembly 400, and has a first state for limiting movement of the flow chamber assembly 400 and a second state for unlocking. In the second state, the flow chamber assembly 400 is movable relative to the main lens barrel 100 along the first direction.

The locking member may be a threaded fastener. The solution injection component 410 is provided with a connection hole 415, and the main lens barrel 100 is provided with a threaded hole 151. In the first state, the threaded fastener is arranged in the connection hole 415 and passes through the connection hole 415, and is screwed in the threaded hole 151. In the second state, the threaded fastener is separated from the threaded hole 151, so that the flow chamber assembly 400 is movable relative to the main lens barrel 100 along the first direction. Specifically, with respect to the embodiment shown in FIG. 7 and FIG. 8, the first installation part 413 is provided with the above-mentioned connection hole 415 penetrating to the first positioning surface 411 and extended along the first direction, and the second positioning surface 150 is provided with the threaded hole 151.

In some alternative embodiments, positioning in the first direction may also be achieved by using the second hole 140. For example, a wall of the main channel 110 is provided with the second hole 140 penetrating to an outer surface of the main lens barrel 100. The second hole 140 is extended along the first direction, for example, the second hole 140 is configured as a strip-shaped hole. The solution injection component 410 is arranged in the second hole 140 and passes through the second hole 140, and is movable along the first direction in the second hole 140. In the embodiment, the solution injection component 410 is provided with a third positioning component, the main lens barrel 100 is provided with a fourth positioning component. The fourth positioning component includes a hole wall of the second hole 140 extended along the first direction. The third positioning component includes a side surface where the solution injection component 410 abuts against the hole wall.

Specifically, the solution injection component 410 of the embodiment includes the above-mentioned second installation part 414 and a boss 417. The second installation part 414 and the boss 417 are arranged along the flow direction of the sample solution to be tested. For example, the boss 417 is connected to an upper side surface of the second installation parts 414. An end of the boss 417 away from the second installation part 414 is connected to the detection component 420. The second installation part 414 and the boss 417 may be formed into an integrated structure through injection molding or other processes.

In the embodiment, the boss 417 is arranged in the second hole 140 and passes through the second hole 140. The third positioning component includes a side surface where the boss 417 abuts against the hole wall of the second hole 140. The boss 417 may be a circular boss as shown in the figure, or may be a rectangular boss.

Based on the third embodiment, in some embodiments, an optical axis of the front optical assembly 200 is parallel to the central axis of the main channel 110, and a distance between the optical axis and the central axis is in a preset range. It should be noted that "the optical axis is parallel to the central axis, and a distance between the optical axis and the central axis is in a preset range" mentioned here includes a situation where the distance is 0. That is, the optical axis may coincide with the central axis, or may deviate from central axis.

In some specific embodiments, the distance between the optical axis and the central axis is less than or equal to 0.02 mm.

Based on the third embodiment, in some embodiments, the optical axis of the front optical assembly 200 intersects the central axis of the main channel 110, and an angle between the optical axis and the central axis is in a preset range.

In some specific embodiments, the angle between the optical axis and the central axis is less than or equal to 5 mrad.

It should be noted that the solution based on the flow chamber assembly 400 connected to the main lens barrel 100, the above-mentioned solution based on the front optical lens barrel 210 forming a nested connection with the main lens barrel 100 and the above-mentioned solution based on the rear optical lens barrel 310 forming a nested connection with the main lens barrel 100 may be combined with each other. For example, the front optical assembly 200 includes the front optical lens barrel 210, the front optical module is connected to the front optical lens barrel 210, then the front optical lens barrel 210 forms a nested connection with the main lens barrel 100. Specific nested solution may be understood with reference to the first embodiment and corresponding specific embodiments. For another example, the rear optical assembly 300 includes the rear optical lens barrel 310, the rear optical module is at least partially connected to the rear optical lens barrel 310, then the rear optical lens barrel 310 forms a nested connection with the main lens barrel 100. Specific nested solution may be understood with reference to the second embodiment and corresponding specific embodiments.

A typical combination of the invention will be described below with reference to FIG. 2 to FIG. 8. The particle detection device includes a main lens barrel 100, a front optical assembly 200, a rear optical assembly 300, a flow chamber assembly 400, a light source 700, and a light receiving assembly. The main lens barrel 100 has a main channel 110 of which a cross section has a circular shape. The front optical assembly 200 has a front optical lens barrel 210 and a front optical module. The front optical module includes multiple lenses. The light source 700 and the multiple lenses are connected to the front optical lens barrel 210. The multiple lenses are located in a front optical channel 211 of the front optical lens barrel 210. A rear end of the front optical lens barrel 210 is inserted into a front end of the main channel 110. The rear optical assembly 300 has a rear optical lens barrel 310 and a rear optical module. A front end of the rear optical lens barrel 310 is inserted into a rear end of the main channel 110. The rear optical module includes a first light converging lens 320 and a first diaphragm 330. The first diaphragm 330 is clamped between the rear optical lens barrel 310 and the main lens barrel 100. The first light converging lens 320 is connected in the main channel 110 and is located between the flow chamber assembly 400 and the first diaphragm 330. The light receiving assembly is connected to the rear optical lens barrel 310. The flow chamber assembly 400 is positioned and connected to the main lens barrel 100 through the third positioning component and the fourth positioning component, and is fixed through the locking member. The detection component 420 of the flow chamber assembly 400 is located in the main channel 110.

The above structure has the following advantages:
1. Both the front optical lens barrel 210 and the rear optical lens barrel 310 are connected to the main lens barrel 100 by way of nested connection, it only needs to insert the front optical lens barrel 210 and the rear optical lens barrel 310 into the main lens barrel 100 during assembly, and the assembly is convenient.
2. Each of the cross section of the main channel 110, the rear end of the front optical lens barrel 210 and the front end of the rear optical lens barrel 310 has a circular shape, which is easy to be processed. Therefore, a high processing accuracy may be ensured. After the front optical lens barrel 210 and the rear optical lens barrel 310 are inserted into the main lens barrel 100, the position between the front optical assembly 200 and the rear optical assembly 300 is ensured by their respective processing accuracy, which may significantly reduce the number of sliding mechanisms and the number of dimensions for alignment, and reduce material and alignment cost.
3. Each of the front optical assembly 200, the rear optical assembly 300 and the flow chamber assembly 400 is installed by using the main lens barrel 100 as a reference, which helps to reduce dimensional transmission errors.
4. The first diaphragm 330 is fixed by way of clamping. Fixing of the first diaphragm 330 may be achieved after the rear optical lens barrel 310 is inserted into place, which facilitates assembly. Further, the rear optical lens barrel 310 does not hinder movement of the first diaphragm 330 in a non-pressing state.

A fourth embodiment of the invention further proposes a particle detection device. The particle detection device according to the fourth embodiment includes a main lens barrel 100, a front optical assembly 200, a rear optical assembly 300, a flow chamber assembly 400, a light source 700, and a light receiving assembly. The flow chamber assembly 400 includes a solution injection component 410, a detection component 420 and a solution discharge component 430 sequentially arranged along a flow direction of a sample solution. The solution injection component 410 is configured for a sample solution to be tested to flow into the detection component 420. Light exited from the front optical assembly 200 illuminates the sample solution to be tested from a side of the detection component 420, and the illuminated sample solution to be tested is discharged from the solution discharge component 430 to a solution discharge pipe.

The front optical assembly 200 includes a front optical module. The front optical module shapes an illuminating light. The shaped light enters the detection component 420 from the incoming side. The rear optical assembly 300 includes a rear optical module. The rear optical module has at least a first optical axis. The illuminating light exited from an outgoing side of the detection component 420 passes through the rear optical module. The rear optical module shapes the illuminating light exited from the outgoing side of the detection component 420. In the embodiment, a central axis of the main channel 110, an optical axis of the front optical module and the first optical axis of the rear optical module are substantially coaxial. In some embodiments, the front optical module includes multiple lenses and other components and the rear optical assembly 300 includes the rear optical module. The rear optical module includes a first light converging lens 320, a first diaphragm 330, and other components.

The embodiment differs from the third embodiment in that in the third embodiment, the front optical module is connected to the main lens barrel 100 through the front optical lens barrel 210, and the rear optical module is connected to the main lens barrel 100 through the rear optical lens barrel 310. However, the embodiment is not limited thereto. The front optical module and the rear optical module may be connected to the main lens barrel 100 in any direct or indirect manner.

Based on the fourth embodiment, in some embodiments, one of the main lens barrel 100 and the flow chamber assembly 400 is provided with a third positioning component, the other of the main lens barrel 100 and the flow chamber assembly 400 is provided with a fourth positioning component. The flow chamber assembly 400 may be positioned to the main lens barrel 100 through the third positioning component and the fourth positioning component. The flow chamber assembly 400 is configured to be movable relative to the main lens barrel 100 along the first direction, thereby achieving adjustment on centering of the light exited from the front optical assembly 200 and the sample solution to be tested. Specifically, a flow channel in the detection component 420 is arranged along a vertical direction, and particles in the sample solution to be tested pass through the flow channel in a queue within the flow channel, so that the particles are illuminated sequentially. After height of the detection component 420 is positioned by the third positioning component and the fourth positioning component, it only needs to further limit positions of the detection component 420 and the light along the first direction (such as a left-right direction of FIG. 6), so that the light exited from the front optical assembly 200 may accurately illuminate the particles in the sample solution to be tested. In some embodiments, the flow chamber assembly 400 and the main lens barrel 100 are also provided with limiting structures along the first direction respectively. After the flow chamber assembly 400 is installed on the main lens barrel 100, a position of the flow chamber assembly 400 along the first direction has been determined without adjustment. However, in the embodiment, the flow chamber assembly 400 is movable along the first direction through the third positioning component and the fourth positioning component, to adjust the position. Since the particles have an extremely small diameter, requirements on installation accuracy of the flow chamber assembly 400 and the main lens barrel 100 along the first direction may be significantly lowered by using the solution in the embodiment, to reduce processing cost.

Based on the main lens barrel 100 and the flow chamber assembly 400 positioned through the third positioning component and the fourth positioning component, with reference to FIG. 7 and FIG. 8, in some embodiments, the solution injection component 410 is provided with a third positioning component, the main lens barrel 100 is provided with a fourth positioning component. The third positioning component includes a third positioning surface 412 of the solution injection component 410. The fourth positioning component includes a fourth positioning surface 160 of the main lens barrel 100. The third positioning surface 412 is in contact with the fourth positioning surface 160, to limit a relative movement between the flow chamber assembly 400 and the main lens barrel 100 along the flow direction of the sample solution to be tested. Furthermore, the flow chamber assembly 400 and the main lens barrel 100 may slide along the first direction in a plane perpendicular to the flow direction of the sample solution to be tested.

In some other embodiments, the third positioning component and the fourth positioning component may also be configured to position the flow chamber assembly 400 in the axial direction. With reference to FIG. 7 and FIG. 8, the third positioning component includes a first positioning surface 411 of the solution injection component 410 perpendicular to the axial direction of the main channel 110, and the fourth positioning component includes a second positioning surface 150 of the main lens barrel 100 perpendicular to the axial direction of the main channel. The first positioning surface 411 is in contact with the second positioning surface 150, to limit a relative movement between the flow chamber assembly 400 and the main lens barrel 100 along the axial direction of the main channel 110.

The sample solution to be tested passes through the flow chamber one by one under an action of fluid mechanics, and forms a scattered signal with illumination of a laser. Scattered light is emitted to the entire space. A photoelectric detector receives the scattered light and acquires information of the sample solution to be tested. Different collection angles of the scattered light correspond to different information of the sample solution to be tested. In the related art, a detector is usually used to collect the scattered light in three angle ranges: a small-angle forward light, a medium-angle forward light, and a large-angle forward light. The scattered light is not converged, but is constrained by using an angle diaphragm directly and is received by the detector, resulting in the following shortcomings in a specific application of a blood sample analyzer: an optical signal collected by the detector has a poor quality, and a detector with a large target area needs to be used to receive the scattered light. Therefore, detectors provided by the related art usually have a problem of poor detection signal, large volume and high cost. In order to solve the above-mentioned problem, based on the first embodiment to the fourth embodiment, some embodiments of the invention further propose a rear optical assembly 300. With reference to FIG. 3, FIG. 5 and FIG. 9, the rear optical module includes a first light converging lens 320, a first diaphragm 330, a reflector 340, a first light receiving device 810, and a second light receiving device 820. The first light converging lens 320, the first diaphragm 330 and the reflector 340 are sequentially arranged along a light emergent direction of the front optical assembly 200. The first light receiving device 810 and the second light receiving device 820 are arranged at a rear side of the reflector 340 along the light emergent direction.

The first light converging lens 320 is at least configured to converge a first illuminating light L1 that is generated through illuminating the sample solution to be tested from the front optical assembly 200 and is within a first angle range, and a second illuminating light L2 that is generated through illuminating the sample solution to be tested from the front optical assembly 200 and is within a second angle range, such as the small-angle forward light and the large-angle forward light. The first illuminating light L1 in the first angle range specifically refers to a scattered light which is generated through illuminating the sample solution to be tested from the front optical assembly 200, and have an angle relative to an optical axis of a light emitted from the front optical assembly 200 in the first angle range. The second illuminating light L2 in the second angle range specifically refers to a scattered light which is generated through illuminating the sample solution to be tested from the front optical assembly 200, and have an angle relative to an optical axis of a light emitted from the front optical assembly 200 in the second angle range.

The reflector 340 is configured to reflect a light formed by the second illuminating light L2 after being converged by the first light converging lens, thereby separating the first illuminating light L1 from the second illuminating light L2. The first light receiving device 810 is at least configured to receive a light formed by the first illuminating light L1 after being converged by the first light converging lens 320. The second light receiving device 820 is configured to receive a light formed by the second illuminating light L2 after being converged by the first light converging lens 320 and reflected by the reflector 340. Specifically, the light converged by the first illuminating light L1 after passing through the first light converging lens 320 may pass from a side of the reflector 340. Or a light transmission part may be arranged on the reflector 340, and the light converged by the first illuminating light L1 after passing through the first light converging lens 320 passes through the light transmission part of the reflector 340. In the embodiment, the second illuminating light L2 is separated by the reflector 340, and the first light receiving device 810 and the second light receiving device 820 receive light with different scattering angles respectively, which is beneficial to improve quality of the light signal received by each light receiving device, and reduce a target surface area, volume and cost of each light receiving device.

In some embodiments, the first light converging lens 320 is further configured to converge a third illuminating light L3 that is generated by illuminating the sample solution to be tested from the front optical assembly 200 and is within a third angle range. The third illuminating light L3 in the third angle range specifically refers to a scattered light that is generated by illuminating the sample solution to be tested from the front optical assembly 200, and have an angle relative to an optical axis of a light emitted from the front optical assembly 200 in the third angle range.

Correspondingly, the first light receiving device 810 is further configured to receive a light formed by the third illuminating light L3 after being converged by the first light converging lens 320, thereby achieving separation of the first illuminating light L1 relative to the second illuminating light L2 and the third illuminating light L3. The light converged by the third illuminating light L3 after passing through the first light converging lens 320 may pass from a side of the reflector 340. Or a light transmission part may be arranged on the reflector 340, and the light converged by the third illuminating light L3 after passing through the first light converging lens 320 passes through the light transmission part of the reflector 340.

In some embodiments, angles in the second angle range are less than angles in the first angle range, and angles in the third angle range are greater than angles in the second angle range and less than angles in the first angle range. Specifically, the first illuminating light L1 is a large-angle scattered light, the second illuminating light L2 is a small-angle scattered light, and the third illuminating light L3 is a medium-angle scattered light.

In some specific embodiments, angles in the first angle range are greater than 20°, angles in the third angle range are equal to or greater than 10°, and angles in the second angle range are greater than 0°. Further, angles in the first angle range are greater than 20° and less than or equal to 45°, angles in the third angle range are equal to or greater than 10° and less than or equal to 20°, and angles in the second angle range are greater than 0° and less than 10°. Furthermore, angles in the first angle range are greater than 20° and less than or equal to 70°, angles in the third angle range are equal to or greater than 10° and less than or equal to 20°, and angles in the second angle range are greater than 0° and less than 10°. Since angles in the second angle range are relatively close to angles in the third angle range, separating the second illuminating light L2 and receiving the second illuminating light L2 through a separate light receiving device may reduce errors and improve identification accuracy.

Collection of scattered light at different angles may correspondingly reflect different information of particles to be tested. Specifically, the second illuminating light L2 collected within a range from 0° to 10° is mainly used to reflect volumes of the particles. Since the third illuminating light L3 within a range from 10° to 20° is more sensitive to refractive indices of cell membrane, cytoplasm and nuclear membrane, the third illuminating light L3 collected from a range from 10° to 20° is mainly used to reflect granularity (complexity) information of particulate matters of the particles. The first illuminating light L1 collected from a range from 20° to 70° is mainly used to improve accuracy of identifying the particles. In a specific implementation, the light receiving device is configured to detect a classification count value of white blood cells. In the implementation, if only the second illuminating light L2 and the third illuminating light L3 are collected, then when a sample with more eosinophils is tested, it is difficult to distinguish eosinophils from neutrophils. However, if the first illuminating light L1, the second illuminating light L2 and the third illuminating light L3 are collected, accuracy of identifying cells may be improved by using the collected scattered light in three angle ranges, so that three-dimensional (3D) data of the particles may be obtained. More particle information may be obtained by collecting scattered light in a wide angle range, so that accuracy of classifying the particles may be improved.

In some embodiments, both the first light receiving device 810 and the second light receiving device 820 have a light receiving area. The light receiving area of the first light receiving device 810 is oriented in the same direction as the light receiving area of the second light receiving device 820, and both are oriented toward the first light converging lens 320. Along an axial direction of the main channel 110A, a distance between the first light receiving device 810 and the first light converging lens 320 is less than a distance between the second light receiving device 820 and the first light converging lens 320. In other words, the first light receiving device 810 is closer to the first light converging lens 320 than the second light receiving device 820. The reason for such arrangement is as follows. The first illuminating light L1 and the third illuminating light L3 will be converged to a spot finally due to a convergence effect of the first light converging lens 320. By arranging the first light receiving device 810 closer to the first light converging lens 320, the first illuminating light L1 and the third illuminating light L3 illuminate the first light receiving device 810 before the first illuminating light L1 and the third illuminating light L3 are converged together, so that two separate spots are formed, to facilitate the first light receiving device 810 to respectively receive lights converged by the first illuminating light L1 and the third illuminating light L3 after passing through the first light converging lens 320. In the embodiment, the first light receiving device 810 may be provided with two parallel light receiving areas corresponding to the first illuminating light L1 and the third illuminating light L3 respectively. That is, lights in two angle ranges are received by one light receiving device, which may reduce the number of light receiving devices and help to reduce cost.

In some embodiments, with reference to FIG. 9, the rear optical module further includes a third diaphragm 350. The third diaphragm 350 is located between the reflector 340 and the second light receiving device 820 along a direction parallel to an axial direction of the first rear optical channel 311. The expression "a direction parallel to an axial direction of the first rear optical channel 311" means that the third diaphragm 350 is not directly aligned with the reflector 340. The third diaphragm 350 is configured to block stray light from illuminating the second light receiving device 820, thereby further improving quality of the optical signal collected by the second light receiving device 820, which is beneficial to improve the optical SNR.

In some embodiments, with reference to FIG. 9, the rear optical module further includes a fourth diaphragm 360. The fourth diaphragm 360 is located in the first rear optical channel 311 and is located between the reflector 340 and the first light receiving device 810 along the axial direction of the first rear optical channel 311. The fourth diaphragm 360 is configured to block stray light from illuminating the first light receiving device 810, thereby further improving quality of the optical signal collected by the first light receiving device 810, which is beneficial to improve the optical SNR.

In some embodiments, with reference to FIG. 9, the rear optical module further includes a third light converging lens 370. The third light converging lens is located in the first rear optical channel 311 and is located between the reflector 340 and the first light receiving device 810 along the axial direction of the first rear optical channel 311. The third light converging lens 370 may further converge the light illuminating the first light receiving device 810 and reduce the size of the spot illuminated onto the first light receiving device 810, thereby reducing a target surface area of the first light receiving device 810, and further reducing volume and cost of the first light receiving device 810.

In some embodiments, the rear optical lens barrel 310 of the embodiment uses a dual-channel design. The rear optical lens barrel 310 further includes a second rear optical channel 312. The first rear optical channel 311 is arranged in parallel to the second rear optical channel 312. The first rear optical channel 311 is at least configured to pass through the light that is converged by the first illuminating light L1 through the first light converging lens 320. The second rear optical channel 312 is configured to pass through the light that is converged by the second illuminating light L2 through the first light converging lens 320 and reflected by the reflector 340. Specifically, the first light receiving device 810 is arranged at a rear end of the first rear optical channel 311. The second light receiving device 820 is arranged at a rear end of the second rear optical channel 312. In some embodiments, the first rear optical channel 311 is further configured to pass through the light that is converged by the third illuminating light L3 through the first light converging lens 320.

Some embodiments of the invention further propose another rear optical assembly 300. The differences between the rear optical assembly 300 and the above-mentioned rear optical assembly 300 are as follows. The above-mentioned rear optical assembly 300 is provided with the first light receiving device 810 and the second light receiving device 820. The first light receiving device 810 receives the light formed by the first illuminating light L1 after being converged by the first light converging lens 320 and the light formed by the third illuminating light L3 after being converged by the first light converging lens 320. However, in the embodiments, the rear optical assembly 300 is further provided with a third light receiving device. The second light receiving device 820 is configured to receive the light formed by the second illuminating light after being converged by the first light converging lens 320 and reflected by the reflector 340. The third light receiving device is configured to receive the light formed by the third illuminating light after being converged by the first light converging lens 320. In other words, lights in different angles are received by different light receiving devices respectively.

Similarly, in the embodiment, angles in the second angle range are less than angles in the first angle range, and angles in the third angle range are greater than angles in the second angle range and less than angles in the first angle range. Specifically, the first illuminating light L1 is a large-angle scattered light, the second illuminating light L2 is a small-angle scattered light, and the third illuminating light L3 is a medium-angle scattered light.

Based on the first embodiment to the fourth embodiment, some embodiments of the invention further propose a front optical assembly 200 which includes a cylindrical lens 230 and a second light converging lens 240. The light source 700, the cylindrical lens 230 and the second light converging lens 240 are sequentially arranged along an axial direction of the front optical channel 211, and at least the cylindrical lens 230 and the second light converging lens 240 are located in the front optical channel 211.

The light source 700 is configured as a laser device which may form a laser. Further, the light source 700 is movable in a vertical plane perpendicular to the central axis of the front optical lens barrel 210, so that a central axis of a beam is substantially coaxial with an optical axis of the lens. After alignment of the light source 700 is completed, the light source 700 may be fixed for example by way of gluing, etc. The cylindrical lens 230 converges an incoming beam in the flow direction of the sample solution to be tested. The second light converging lens 240 converges the incoming beam in the flow direction of the sample solution to be tested and the first direction.

In some embodiments, with reference to FIG. 5 and FIG. 9, the front optical module further includes a non-spheric lens 250. The non-spheric lens 250 is located in the front optical channel 211 and between the light source 700 and the cylindrical lens 230. The non-spheric lens 250 is configured to collimate a beam exited from the light source 700.

In some embodiments, with reference to FIG. 5 and FIG. 9, the front optical module further includes an optical isolator 260. The optical isolator 260 is located in the front optical channel 211 and between the non-spheric lens 250 and the cylindrical lens 230. The optical isolator 260 is configured to prevent the incoming beam from forming a reflected beam after illuminating the cylindrical lens 230 and the second light converging lens 240, thereby improving SNR of the incoming beam illuminating a sample flow in the flow chamber.

In some embodiments, with reference to FIG. 5 and FIG. 9, the front optical module further includes a second diaphragm 220. The second diaphragm 220 is located in the front optical channel 211 and between the light source 700 and the non-spheric lens 250.

In some embodiments, with reference to FIG. 5, along an axial direction of the front optical lens barrel, the front optical channel 211 includes multiple first installation cavities 213 sequentially arranged. The multiple first installation cavities 213 extend to a rear end surface of the front optical lens barrel 210. Inner diameters of the multiple first installation cavities increase sequentially, to facilitate installing optical components of the above-mentioned front optical module into the front optical lens barrel 210 sequentially.

In some embodiments, with reference to FIG. 5, the front optical channel 211 further includes a second installation cavity 214. The second installation cavity 214 extends to a front end surface of the front optical lens barrel 210. The second installation cavity 214 is communicated to the first installation cavity 213 through an intermediate cavity. The light source 700 is at least partially located in the second installation cavity 214, to achieve connection between the light source 700 and the front optical lens barrel 210.

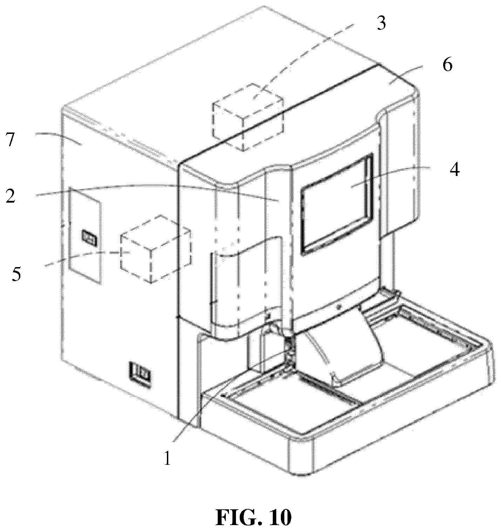

A fifth embodiment of the invention further proposes a sample analyzer. With reference to FIG. 10, the sample analyzer includes a sampling device 1, a sample preparation device 2, a particle detection device 3, a display device 4 and a control device 5. The sampling device 1 is configured to acquire a sample to be tested. The sample preparation device 2 is configured to receive the sample to be tested acquired by the sampling device 1, and mix the sample to be tested with a reagent, to prepare a sample solution to be tested. The particle detection device 3 is configured to detect the sample solution to be tested prepared by the sample preparation device 2, to obtain routine blood parameters. The display device 4 is configured to display information related to the routine blood parameters. For example, the display device 4 is configured as a user interface. The control device 5 includes a processor and a storage medium storing a computer program. Besides the above main devices, the sample analyzer may further include a first housing 6 and a second housing 7. The particle detection device 3 and the control device 5 are arranged inside the second housing 7 and are arranged at two sides of the second housing 7 respectively. The sample preparation device 2 is arranged inside the first housing 6. The display device 4 is arranged on an outer surface of the first housing 6.

The particle detection device 3 of the embodiment may use the particle detection device according to the above-mentioned first embodiment and other specific embodiments based on the first embodiment, and specifically include a main lens barrel 100, a front optical assembly 200, a rear optical assembly 300, a flow chamber assembly 400, a light source 700, and a light receiving assembly. The main lens barrel 100 has a main channel 110. The front optical assembly 200 further includes a front optical lens barrel 210. A front optical module is connected to the front optical lens barrel 210. The front optical lens barrel 210 forms a nested connection with the main lens barrel 100. In this way, a displacement between the front optical lens barrel 210 and the main lens barrel 100 in a radial plane is limited by lens barrel walls abutted mutually. Therefore, it only needs to ensure accuracy of inner and outer circles of the front optical lens barrel 210 and the main lens barrel 100, so that accurate positioning in a radial direction may be achieved.

Furthermore, in the embodiment, the front optical assembly 200 includes a single front optical lens barrel 210, and the main lens barrel 100 forms a nested connection with the single front optical lens barrel 210. In other words, the front optical module is indirectly connected to the main lens barrel 100 through the front optical lens barrel 210. In this way, the front optical assembly 200 may be separately assembled in advance, and then the front optical lens barrel 210 forms a nested connection with the main lens barrel 100, which facilitates assembly.

A sixth embodiment of the invention further proposes a sample analyzer. With reference to FIG. 10, the sample analyzer includes a sampling device 1, a sample preparation device 2, a particle detection device 3, a display device 4 and a control device 5. The sampling device 1 is configured to acquire a sample to be tested. The sample preparation device 2 is configured to receive the sample to be tested acquired by the sampling device 1, and mix the sample to be tested with a reagent, to prepare a sample solution to be tested. The particle detection device 3 is configured to detect the sample solution to be tested prepared by the sample preparation device 2, to obtain routine blood parameters. The display device 4 is configured to display information related to the routine blood parameters. For example, the display device 4 is configured as a user interface. The control device 5 includes a processor and a storage medium storing a computer program. Besides the above main devices, the sample analyzer may further include a first housing 6 and a second housing 7. The particle detection device 3 and the control device 5 are arranged inside the second housing 7 and are arranged at two sides of the second housing 7 respectively. The sample preparation device 2 is arranged inside the first housing 6. The display device 4 is arranged on an outer surface of the first housing 6.

The particle detection device 3 of the embodiment may use the particle detection device according to the above-mentioned second embodiment and other specific embodiments based on the second embodiment, and specifically include a main lens barrel 100, a front optical assembly 200, a rear optical assembly 300, a flow chamber assembly 400, a light source 700, and a light receiving assembly. The main lens barrel 100 has a main channel 110. The rear optical assembly 300 further includes a rear optical lens barrel 310. A rear optical module is connected to the rear optical lens barrel 310. The rear optical lens barrel 310 forms a nested connection with the main lens barrel 100. In this way, a displacement between the rear optical lens barrel 310 and the main lens barrel 100 in a radial plane is limited by lens barrel walls abutted mutually. Therefore, it only needs to ensure accuracy of inner and outer circles of the rear optical lens barrel 310 and the main lens barrel 100, so that accurate positioning in a radial direction may be achieved.

A seventh embodiment of the invention further proposes a sample analyzer. With reference to FIG. 10, the sample analyzer includes a sampling device 1, a sample preparation device 2, a particle detection device 3, a display device 4 and a control device 5. The sampling device 1 is configured to acquire a sample to be tested. The sample preparation device 2 is configured to receive the sample to be tested acquired by the sampling device 1, and mix the sample to be tested with a reagent, to prepare a sample solution to be tested. The particle detection device 3 is configured to detect the sample solution to be tested prepared by the sample preparation device 2, to obtain routine blood parameters. The display device 4 is configured to display information related to the routine blood parameters. For example, the display device 4 is configured as a user interface. The control device 5 includes a processor and a storage medium storing a computer program. Besides the above-mentioned main devices, the sample analyzer may further include a first housing 6 and a second housing 7. The particle detection device 3 and the control device 5 are arranged inside the second housing 7 and are arranged at two sides of the second housing 7 respectively. The sample preparation device 2 is arranged inside the first housing 6. The display device 4 is arranged on an outer surface of the first housing 6.

The particle detection device 3 of the embodiment may use the particle detection device according to the above-mentioned third embodiment and other specific embodiments based on the third embodiment, and specifically include a main lens barrel 100, a front optical assembly 200, a rear optical assembly 300, a flow chamber assembly 400, a light source 700, and a light receiving assembly. The front optical assembly 200 includes a front optical lens barrel 210 and a front optical module connected to the front optical lens barrel 210. The rear optical assembly 300 includes a rear optical lens barrel 310 and a rear optical module connected to the rear optical lens barrel 310.

The flow chamber assembly 400 includes a solution injection component 410, a detection component 420 and a solution discharge component 430 sequentially arranged along a flow direction of a sample solution. The solution injection component 410 is configured for a sample solution to be tested to flow into the detection component 420. At least the detection component 420 of the flow chamber assembly 400 is located in the main channel 110. A central axis of the main channel 110 is located at two ends of the detection component 420 along a flow direction of the sample solution to be tested. That is, after assembly of the flow chamber assembly 400, the main lens barrel 100, the front optical assembly 200 and the rear optical assembly 300 is completed, positions of the detection component 420, the front optical assembly 200 and the rear optical assembly 300 correspond to each other along the flow direction of the sample solution to be tested, to ensure that an illuminating light exited from the front optical assembly 200 may illuminate the sample solution to be tested in the detection component 420, and the illuminating light exited from the detection component 420 may also pass through the rear optical module accurately, thereby omitting a process of adjusting the flow chamber assembly 400 in the flow direction of the sample solution to be tested, and making assembly and alignment operations simpler.

The embodiments of the invention have been described in detail as above with reference to the drawings. However, the invention is not limited to the above embodiments. Within the scope of knowledge possessed by those of ordinary skill in the art, various variations may also be made without departing from the purpose of the invention. Furthermore, the embodiments of the invention and features in the embodiments may be combined with each other without conflict.

## Claims

1. A particle detection device, comprising:
a light source, configured to provide an illuminating light;
a front optical assembly, comprising a single front optical lens barrel and a front optical module, the single front optical lens barrel comprising a front optical channel in which the front optical module is arranged, wherein the illuminating light passes through the front optical module, and the front optical module shapes the illuminating light;
a main lens barrel, having a main channel through which the illuminating light shaped by the front optical module passes;
a flow chamber assembly, connected to the main lens barrel, and having a detection component configured for a sample solution to be tested to pass through, wherein the detection component comprises an incoming side arranged toward the front optical assembly and an outgoing side arranged opposite to the incoming side, and the illuminating light shaped by the front optical module enters the detection component from the incoming side, illuminates the sample solution to be tested, and then exits from the outgoing side;
a rear optical assembly, comprising a rear optical module which shapes the illuminating light exited from the outgoing side of the detection component; and
a light receiving assembly, configured to receive the illuminating light shaped by the rear optical assembly,
wherein a cross section of the main channel has a circular shape, and the single front optical lens barrel is at least partially located in the main channel, to form a nested connection with the main lens barrel; or, a cross section of the front optical channel has a circular shape, and the main lens barrel is partially located in the front optical channel, to form a nested connection with the single front optical lens barrel, and
wherein a central axis of the front optical channel, a central axis of the main channel and an optical axis of the front optical module are substantially coaxial.

2. The particle detection device of claim 1, wherein the light source is movable relative to the main lens barrel along an axial direction of the main channel, to adjust a distance between the light source and the flow chamber assembly.

3. The particle detection device of claim 2, wherein the light source is connected to the single front optical lens barrel,
the single front optical lens barrel, the light source and the front optical module are synchronously movable relative to the main lens barrel along the axial direction of the main channel; or, the light source is movable relative to the single front optical lens barrel along the axial direction of the main channel.

4. The particle detection device of claim 3, further comprising: a limiter, connected to one of the single front optical lens barrel and the main lens barrel, and capable of acting on the other of the single front optical lens barrel and the main lens barrel, to maintain a relative position between the single front optical lens barrel and the main lens barrel along the axial direction of the main channel, and/or to limit a relative rotation between the single front optical lens barrel and the main lens barrel along a circumferential direction of the main channel or a circumferential direction of the front optical channel.

5. The particle detection device of claim 4, wherein the other of the single front optical lens barrel and the main lens barrel has a limiting groove, a distance between groove walls at two sides of the limiting groove gradually decreases along a radial direction pointing to the central axis of the main channel, and the limiter is inserted into the limiting groove and abuts against the groove walls at the two sides of the limiting groove.

6. The particle detection device of claim 1, wherein the rear optical module comprises a first light converging lens and a first diaphragm, the light receiving assembly is configured to receive the illuminating light that exits from the outgoing side of the detection component and passes through the first light converging lens and the first diaphragm,
the particle detection device further comprises a pressing member connected to the main lens barrel, and the first diaphragm is clamped between the main lens barrel and the pressing member.

7. The particle detection device of claim 6, wherein the first light converging lens is connected to the main lens barrel, and is located between the detection component and the first diaphragm.

8. The particle detection device of claim 6, wherein the pressing member is configured as a rear optical lens barrel, the first light converging lens and the light receiving assembly are both connected to the rear optical lens barrel, and the first light converging lens is located between the first diaphragm and the light receiving assembly.

9. The particle detection device of claim 6, wherein the pressing member is configured as a rear optical lens barrel having at least a first rear optical channel, wherein
when the cross section of the main channel has a circular shape, the rear optical lens barrel is at least partially located in the main channel, to form a nested connection with the main lens barrel; or, when a cross section of the first rear optical channel has a circular shape, the main lens barrel is partially located in the first rear optical channel, to form a nested connection with the rear optical lens barrel, and
the first rear optical channel is configured for the illuminating light exited from the outgoing side of the detection component to pass through, and a central axis of the first rear optical channel, the central axis of the main channel, the central axis of the front optical channel and the optical axis of the front optical module are substantially coaxial.

10. The particle detection device of claim 6, wherein the main channel comprises a first channel section and a second channel section sequentially arranged along an axial direction of the main channel, a diameter of the first channel section is less than a diameter of the second channel section, to form an abutting surface at a conjunction of the first channel section and the second channel section, and the pressing member is inserted into the second channel section, to press the first diaphragm against the abutting surface.

11. The particle detection device of claim 10, wherein a wall of the second channel section is provided with a first hole penetrating to an outer surface of the main lens barrel, and the first hole is configured for the first diaphragm to move relative to the main lens barrel along a penetration direction of the first hole.

12. The particle detection device of claim 6, wherein the pressing member is detachably connected to the main lens barrel, the first diaphragm is configured to be movable relative to the main lens barrel along a first direction when the pressing member is in a non-pressing state, and the first direction is parallel to a radial direction of the main channel that is perpendicular to a flow direction of the sample solution to be tested.

13. The particle detection device of claim 12, wherein
one of the main lens barrel and the first diaphragm is provided with a first positioning component, the other of the main lens barrel and the first diaphragm is provided with a second positioning component, and the first diaphragm is movable along the first direction through the first positioning component and the second positioning component,
or,
one of the pressing member and the first diaphragm is provided with a first positioning component, the other of the pressing member and the first diaphragm is provided with a second positioning component, and the first diaphragm is movable along the first direction through the first positioning component and the second positioning component.

14. The particle detection device of claim 1, wherein the rear optical assembly further comprises a rear optical lens barrel having at least a first rear optical channel, a central axis of the first rear optical channel, the central axis of the main channel, the central axis of the front optical channel and the optical axis of the front optical module are substantially coaxial, the rear optical module comprises a first light converging lens and a first diaphragm, the light receiving assembly is configured to receive the illuminating light that exits from the outgoing side of the detection component and passes through the first light converging lens and the first diaphragm, the first light converging lens and the first diaphragm are arranged in the first rear optical channel, and the light receiving assembly is connected to the rear optical lens barrel, and wherein
when the cross section of the main channel has a circular shape, the rear optical lens barrel is at least partially located in the main channel, to form a nested connection with the main lens barrel,
or,
when a cross section of the first rear optical channel has a circular shape, the main lens barrel is partially located in the first rear optical channel, to form a nested connection with the rear optical lens barrel.

15. The particle detection device of claim 1, wherein the rear optical module comprises a first light converging lens and a first diaphragm, the light receiving assembly is configured to receive the illuminating light that exits from the outgoing side of the detection component and passes through the first light converging lens and the first diaphragm, and wherein the first light converging lens, the first diaphragm and the light receiving assembly are all connected to the main lens barrel.

16. The particle detection device of claim 15, wherein a wall of the main channel is provided with a first hole penetrating to an outer surface of the main lens barrel, and the first diaphragm is configured to be movable relative to the main lens barrel through the first hole along a penetration direction of the first hole.

17. The particle detection device of claim 16, wherein at least one end of the first diaphragm is extended out of the first hole, and the particle detection device further comprises a fixing member which acts on an extended part of the first diaphragm to fix the first diaphragm to the main lens barrel.

18. The particle detection device of claim 1, wherein
the rear optical assembly further comprises a rear optical lens barrel having at least a first rear optical channel, the first rear optical channel is configured for the illuminating light exited from the outgoing side of the detection component to pass through, a central axis of the first rear optical channel, the central axis of the main channel, the central axis of the front optical channel and the optical axis of the front optical module are substantially coaxial, and the rear optical module is at least partially connected to the rear optical lens barrel,
or,
the rear optical assembly comprises a rear optical module, and the rear optical module is entirely connected to the main lens barrel.

19. The particle detection device of claim 1, wherein the flow chamber assembly further comprises a solution injection component and a solution discharge component, the solution injection component, the detection component and the solution discharge component are sequentially arranged along a flow direction of the sample solution to be tested, and wherein at least the detection component is located in the main channel.

20. The particle detection device of claim 1, wherein the flow chamber assembly is connected to the main lens barrel and is configured to be movable relative to the main lens barrel along a first direction, and the first direction is parallel to a radial direction of the main channel that is perpendicular to a flow direction of the sample solution to be tested.

21. The particle detection device of claim 20, wherein one of the main lens barrel and the flow chamber assembly is provided with a third positioning component, the other of the main lens barrel and the flow chamber assembly is provided with a fourth positioning component, and the flow chamber assembly is movable relative to the main lens barrel along the first direction through the third positioning component and the fourth positioning component.

22. The particle detection device of claim 1, wherein the rear optical module comprises a first light converging lens and a reflector, and the light receiving assembly comprises a first light receiving device and a second light receiving device,
the first light converging lens is configured to converge a first illuminating light exited from the outgoing side of the detection component and within a first angle range, a second illuminating light exited from the outgoing side of the detection component and within a second angle range, and a third illuminating light exited from the outgoing side of the detection component and within a third angle range,
the reflector is configured to reflect a light formed by the second illuminating light after being converged by the first light converging lens,
the first light receiving device is configured to receive a light formed by the first illuminating light after being converged by the first light converging lens and a light formed by the third illuminating light after being converged by the first light converging lens, and the second light receiving device is configured to receive a light formed by the second illuminating light after being converged by the first light converging lens and reflected by the reflector.

23. The particle detection device of claim 22, wherein angles in the second angle range are less than angles in the first angle range, and angles in the third angle range are greater than angles in the second angle range and less than angles in the first angle range.

24. The particle detection device of claim 22, wherein both the first light receiving device and the second light receiving device have a light receiving area, the light receiving area of the first light receiving device is oriented in a same direction as the light receiving area of the second light receiving device, and along an axial direction of the main channel, a distance between the light receiving area of the first light receiving device and the first light converging lens is less than a distance between the light receiving area of the second light receiving device and the first light converging lens.

25. The particle detection device of claim 1, wherein the front optical module comprises a cylindrical lens and a second light converging lens that are sequentially arranged along an axial direction of the front optical channel and located in the front optical channel.

26. The particle detection device of claim 25, wherein the front optical module further comprises a non-spheric lens located in the front optical channel and between the light source and the cylindrical lens.

27. The particle detection device of claim 26, wherein
the front optical module further comprises an optical isolator located in the front optical channel and between the non-spheric lens and the cylindrical lens,
and/or,
the front optical module further comprises a second diaphragm located in the front optical channel and between the light source and the non-spheric lens.

28. The particle detection device of claim 1, wherein the front optical channel comprises, along an axial direction of the front optical channel, a plurality of first installation cavities sequentially arranged and extended to a rear end surface of the front optical lens barrel, and inner diameters of the plurality of first installation cavities increase sequentially.

29. The particle detection device of claim 28, wherein the front optical channel further comprises a second installation cavity extended to a front end surface of the front optical lens barrel, and the light source is at least partially located in the second installation cavity.

30. A sample analyzer, comprising:
a sampling device, configured to acquire a sample to be tested;
a sample preparation device, configured to receive the sample to be tested which is acquired by the sampling device, and mix the sample to be tested with a reagent to prepare a sample solution to be tested;
the particle detection device of any one of claims 1 to 29;
a liquid supply device, configured to provide a sheath liquid to the flow chamber assembly, so that particles in the sample solution to be tested pass through the detection component in a queue under wrapping of the sheath liquid; and
a controller, configured to obtain a measurement result of the sample to be tested according to a feedback signal received by the light receiving assembly.
